# EUROPEAN PATENT APPLICATION

(11) **EP 4 421 603 A1**
(43) Date of publication of application: **28.08.2024**
(21) Application number: 23828324.6
(22) Date of filing: 28.12.2023
(51) Int. Cl.: G06F 3/04842, G06F 3/041, G06F 3/0481, G06F 3/14, G02B 27/01, G06F 1/16

(54) **WEARABLE DEVICE FOR SWITCHING AT LEAST ONE APPLICATION ON BASIS OF TYPE OF EXTERNAL ELECTRONIC DEVICE AND METHOD THEREFOR**

(30) Priority: 04.01.2023 KR 20230001407; 25.01.2023 KR 20230009746
(71) Applicant: Samsung Electronics Co., Ltd., Suwon-si, Gyeonggi-do 16677 (KR)
(72) Inventor: BANG, Myojin, Suwon-si Gyeonggi-do 16677 (KR); LEE, Chaekyung, Suwon-si Gyeonggi-do 16677 (KR); AN, Jinwan, Suwon-si Gyeonggi-do 16677 (KR)
(74) Representative: Nederlandsch Octrooibureau
(86) International application number: PCT/KR2023/021954
(87) International publication number: WO 2024/147569

(57) **Abstract**

According to an embodiment, a processor of a wearable device may display at least one first screen. The processor may transmit, in response to identifying that an external electronic device is transformed into a first state based on the information, to the external electronic device information with respect to the at least one first screen to display at least one second screen associated with the at least one screen displayed on the display of the wearable device through the external electronic device. The processor may transmit, in response to identifying that the external electronic device is transformed into a second state different from the first state based on the information, information associated with at least one third screen displayed through the external electronic device. The processor may display within the display of the wearable device at least one fourth screen associated with the at least one third screen being displayed through the display of the external electronic device.

## Description

### [Technical Field]

The present disclosure relates to a wearable device for changing at least one application based on a form of an external electronic device and a method thereof.

### [Background Art]

In order to provide an enhanced user experience, an electronic device providing an augmented reality (AR) service, which displays information generated by computer in association with an external object within the real-world, are being developed. The electronic device may be a wearable device that may be worn by a user. For example, the electronic device may be an AR glasses and/or a head-mounted device (HMD).

### [Disclosure]

### [Technical Solution]

According to an embodiment, a wearable device may comprise a communication circuitry, a display, memory configured to store instructions, and a processor. The instructions, when executed by the processor, cause the wearable device to display within the display at least one first screen. The instructions, when executed by the processor, cause the wearable device to transmit, in response to identifying that an external electronic device is transformed into a first state based on the information, to the external electronic device information with respect to the at least one first screen to display at least one second screen associated with the at least one screen displayed on the display of the wearable device through the external electronic device. The instructions, when executed by the processor, cause the wearable device to transmit, in response to identifying that the external electronic device is transformed into a second state different from the first state based on the information, information associated with at least one third screen displayed through the external electronic device. The instructions, when executed by the processor, cause the wearable device to display within the display of the wearable device at least one fourth screen associated with the at least one third screen being displayed through the display of the external electronic device.

The non-transitory computer readable storage medium storing instructions may be provided. The instructions, when executed by an wearable device including a communication circuitry, and a display, cause the wearable device to display within the display at least one first screen. The instructions, when executed by the wearable device, cause the wearable device to transmit, in response to identifying that an external electronic device is transformed into a first state based on the information, to the external electronic device information with respect to the at least one first screen to display at least one second screen associated with the at least one screen displayed on the display of the wearable device through the external electronic device. The instructions, when executed by the wearable device, cause the wearable device to transmit, in response to identifying that the external electronic device is transformed into a second state different from the first state based on the information, information associated with at least one third screen displayed through the external electronic device. The instructions, when executed by the wearable device, cause the wearable device to display within the display of the wearable device at least one fourth screen associated with the at least one third screen being displayed through the display of the external electronic device on the display of the wearable device.

According to an embodiment, a wearable device may comprise a communication circuitry, a display, memory configured to store instructions, and a processor. The instructions, when executed by the processor, may cause the wearable device to obtain information with respect to a form of an external electronic device. The instructions, when executed by the processor, may cause the wearable device to, in response to identifying that the external electronic device is transformed into a first form based on the information, execute a function to move at least one first screen being displayed on the display of the wearable device to a display of the external electronic device. The instructions, when executed by the processor, may cause the wearable device to, in response to identifying that the external electronic device is transformed into a second form different from the first form based on the information, display at least one second screen being displayed through the display of the external electronic device on the display of the wearable device.

According to an embodiment, a method performed by a wearable device may comprise obtaining information with respect to a form of an external electronic device. The method may comprise, in response to identifying that the external electronic device is transformed into a first form based on the information, executing a function to move at least one first screen being displayed in a display of the wearable device to a display of the external electronic device. The method may comprise, in response to identifying that the external electronic device is transformed into a second form different from the first form based on the information, displaying at least one second screen being displayed through the display of the external electronic device on the display of the wearable device.

According to an embodiment, a wearable device may comprise a camera, a communication circuit, a display, memory storing instructions, and a processor. The instructions, when executed by the processor, may cause the wearable device to obtain information on a form of the external electronic device, in a state in which an external electronic device viewed through the display by using the camera is identified. The instructions, when executed by the processor, may cause the wearable device to display a visual object on the display to guide the movement of at least one media content, based on identifying transformation of a flexible display of the external electronic device by using the information. The instructions, when executed by the processor, may cause the wearable device to, while the visual object is displayed, execute a function for moving at least one media content between the wearable device and the external electronic device, based on transformation of the flexible display viewed through the display.

According to an embodiment, a method of a wearable device may comprise obtaining information on a form of the external electronic device, in a state in which an external electronic device viewed through a display of the wearable device by using a camera of the wearable device is identified. The method may comprise displaying a visual object on the display to guide the movement of at least one media content, based on identifying transformation of a flexible display of the external electronic device by using the information. The method may comprise, while the visual object is displayed, executing a function for moving at least one media content between the wearable device and the external electronic device, based on transformation of the flexible display viewed through the display.

### [Description of the Drawings]

FIG. 1 illustrates an example of an operation in which a wearable device moves a screen between an external electronic device and the wearable device, according to an embodiment.
FIG. 2 illustrates an example of a block diagram of a wearable device, according to an embodiment.
FIG. 3 illustrates an example of a flowchart of operations performed by a wearable device, according to an embodiment.
FIG. 4 illustrates an example of an operation in which a wearable device moves media content to an external electronic device, according to an embodiment.
FIG. 5 illustrates an example of an operation in which a wearable device moves media content displayed through an external electronic device to the wearable device, according to an embodiment.
FIG. 6 illustrates an example of a flowchart of operations performed by a wearable device, according to an embodiment.
FIGS. 7A to 7B illustrate an example of a signal flowchart between a wearable device and an external electronic device, according to an embodiment.
FIGS. 8A to 8B illustrate an example of an operation performed by a wearable device based on a form of an external electronic device, according to an embodiment.
FIG. 9 illustrates an example of a flowchart of operations performed by a wearable device, according to an embodiment.
FIGS. 10A to 10B illustrate an example of a signal flowchart between a wearable device and an external electronic device, according to an embodiment.
FIGS. 11A to 11C illustrate an example of an operation in which a wearable device moves at least one application based on a form of an external electronic device, according to an embodiment.
FIG. 12 illustrates an example of an operation performed by a wearable device based on a direction of an external electronic device, according to an embodiment.
FIG. 13 illustrates an example of an operation performed by a wearable device based on a form of an external electronic device, according to an embodiment.
FIG. 14A illustrates an example of a perspective view of a wearable device, according to an embodiment.
FIG. 14B illustrates an example of one or more hardware disposed in a wearable device, according to an embodiment.
FIGS. 15A to 15B illustrate an example of an exterior of a wearable device, according to an embodiment.

### [Mode for Invention]

Hereinafter, various embodiments of the present document will be described with reference to the accompanying drawings.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

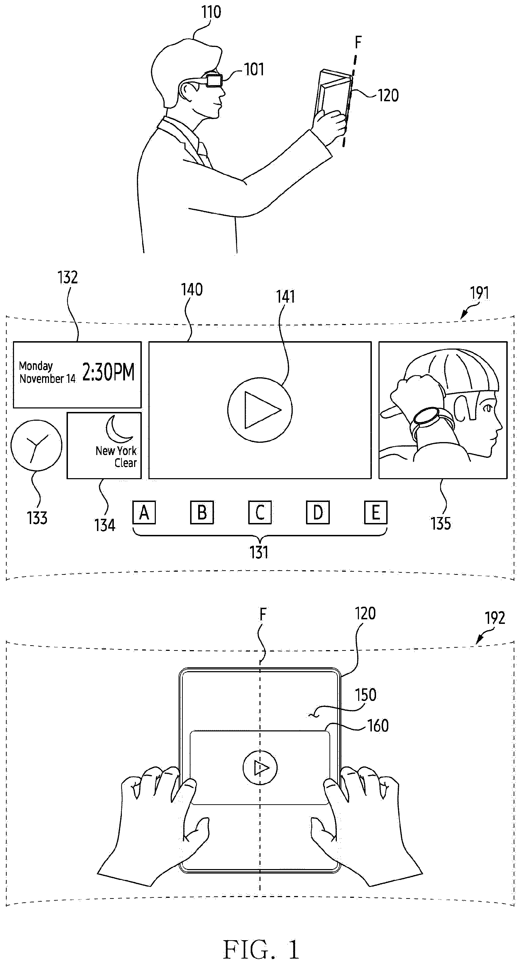

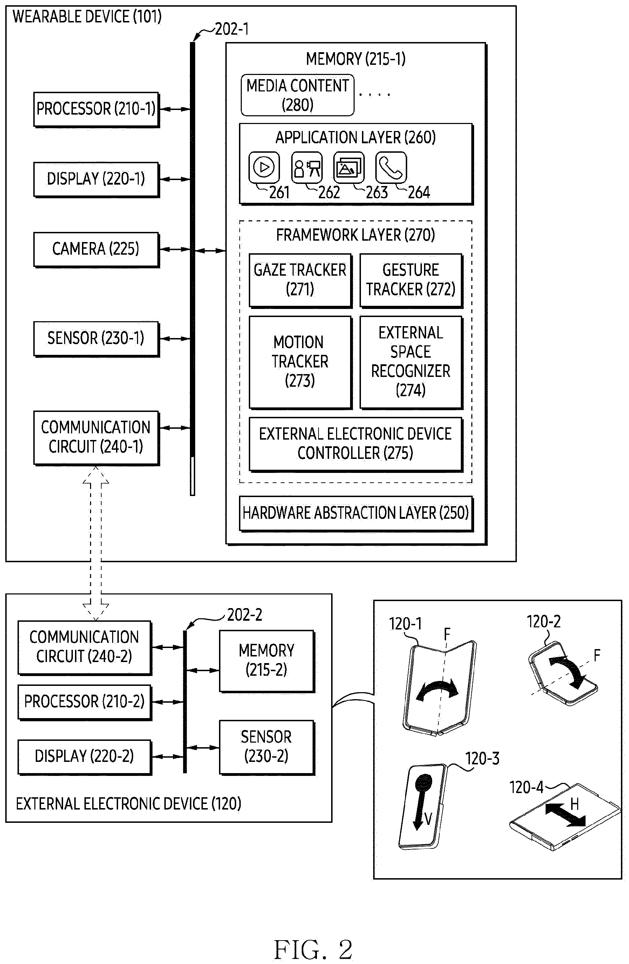

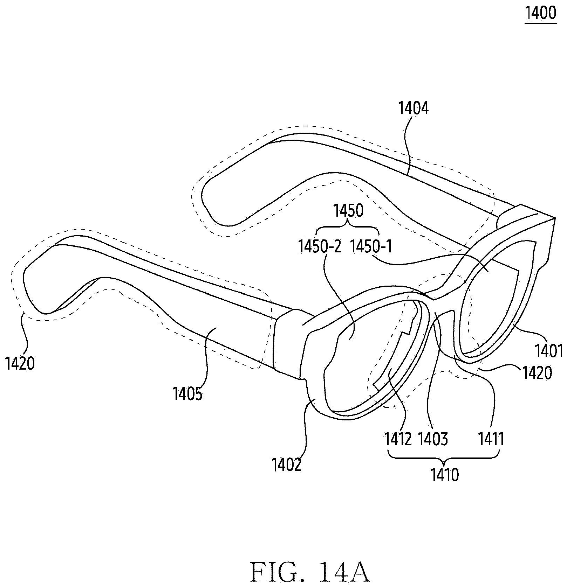

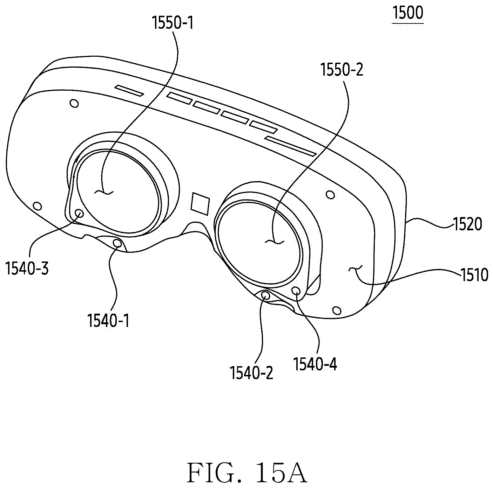

FIG. 1 illustrates an example of an operation in which a wearable device 101 moves a screen between an external electronic device 120 and the wearable device 101, according to an embodiment. In an embodiment, the wearable device 101 may include a head-mounted display (HMD) wearable on a head of a user 110. Although an exterior of the wearable device 101 having a form of glasses is illustrated, embodiment is not limited thereto. An example of one or more hardware included in the wearable device 101 will be described with reference to FIG. 2. An example of a structure of the wearable device 101 wearable on a head of the user 110 will be described with reference to FIGS. 14A to 14B and/or 15A to 15B. The wearable device 101 may be referred to as an electronic device. For example, the electronic device may be combined with an accessory for attachment to the user's head to form the HMD.

According to an embodiment, the wearable device 101 may execute a function related to video see-through (VST) and/or virtual reality (VR). Referring to FIG. 1, in a state in which the user 110 wears the wearable device 101, the wearable device 101 may include a housing covering the user 110's eyes. The wearable device 101 may include a display disposed on a first surface of the housing facing the eyes in the state. The wearable device 101 may include a camera disposed on a second surface opposite to the first surface. The wearable device 101 may obtain frames including ambient light, by using the camera. The wearable device 101 may output the frames in a display disposed on the first surface so that the user 110 may recognize the ambient light through the display. A displaying region of the display disposed on the first surface may be formed by one or more pixels included in the display. The wearable device 101 may synthesize a virtual object in frames outputted through the display so that the user 110 may recognize the virtual object together with a real object recognized by the ambient light.

According to an embodiment, the wearable device 101 may execute a function related to augmented reality (AR) and/or mixed reality (MR). As shown in FIG. 1, in a state in which the user 110 wears the wearable device 101, the wearable device 101 may include at least one lens disposed adjacent to the user 110's eyes. The wearable device 101 may combine light emitted from the display of the wearable device 101 with ambient light passing through the lens. The displaying region of the display may be formed within a lens through which ambient light passes. Since the wearable device 101 combines the ambient light and the light emitted from the display, the user 110 may see an image that is a mixture of a real object recognized by the ambient light and a virtual object formed by the light emitted from the display.

In an embodiment, the wearable device 101 may communicate with the external electronic device 120 in order to support controllability of a plurality of electronic devices including the wearable device 101. Referring to FIG. 1, exemplary states 191 and 192 in which the wearable device 101 is connected to the external electronic device 120 are illustrated. The external electronic device 120 may be a terminal able to be owned by the user 110. Referring to FIG. 1, the external electronic device 120 including a housing foldable by a folding axis F is exemplarily illustrated. According to an embodiment, the wearable device 101 may perform moving (or exchanging or transferring) of information between the external electronic device 120 and the wearable device 101, based on a form of the external electronic device 120 that is deformed with respect to the folding axis F. The information moved between the external electronic device 120 and the wearable device 101 may include an image, video, text, or a combination thereof that may be outputted through a display of the wearable device 101 and/or the external electronic device 120. The information moved between the external electronic device 120 and the wearable device 101 may include a screen provided from at least one application. The screen may be displayed based on a region assigned to the application, such as activity and/or a window. The screen, as an execution screen of an application, may include, which is generated based on execution of the application, text, an image, a video, a UI for interacting with a user, or any combination thereof

Referring to FIG. 1, in state 191, according to an embodiment, the wearable device 101 may provide a user experience based on VST through a display covering two eyes of the user 110. For example, the wearable device 101 may display at least one virtual object together with an image of at least a portion of external environment (e.g., a portion of external environment in which the user 110's eyes faces). Referring to the exemplary state 191 of FIG. 1, the at least one virtual object displayed by the wearable device 101 may include icons 131 representing an application. The at least one virtual object may include screens 132, 133, 134, and 135 provided from at least one application executed by the wearable device 101. Based on the execution of the application, the wearable device 101 may display a widget (e.g., the screen 133 having a watch form) and/or a window (e.g., the screen 132 provided by an application to display a schedule, the screen 134 provided by an application to display weather information, and/or the screen 135 provided by an application for video conference). The at least one virtual object may include a screen 140 displayed for reproducing media content including video. The wearable device 101 may display a visual object, such as a play button 141, for controlling reproduction of media content corresponding to the screen 140 on the screen 140.

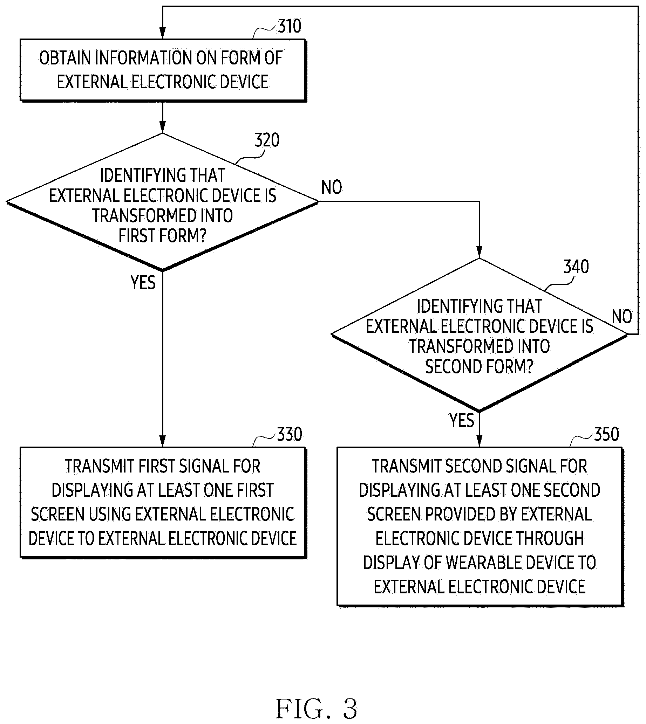

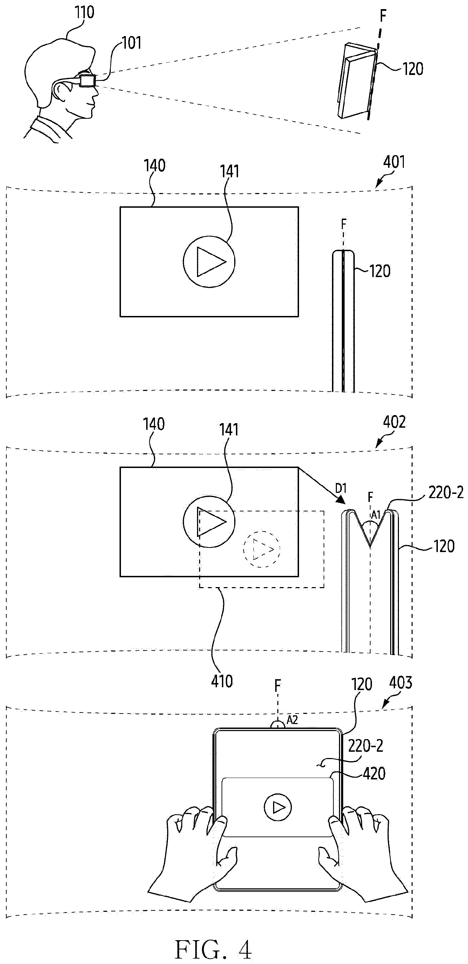

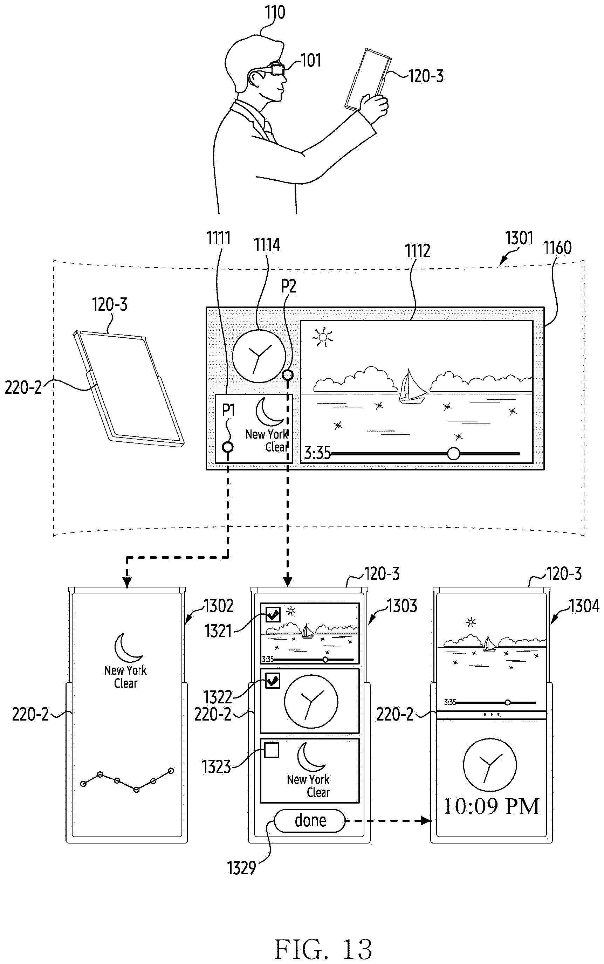

According to an embodiment, the wearable device 101 may execute a function for moving the screen displayed through the display of the wearable device 101 to an external electronic device 120 different from the wearable device 101. The wearable device 101 may execute the function based on recognizing or identifying a change of the form of the external electronic device 120. Deformation of the external electronic device 120 may cause deformation of a flexible display included in the external electronic device 120. The term "deformation" can be understood as a change, transition or transformation of a form of the external electronic device 120 operated by a user. According to an embodiment, an operation in which the wearable device 101 identifies the deformation of the flexible display and executes the function based on the identified deformation will be described with reference to FIG. 3. As an example of an external electronic device 120 including a deformable flexible display, an external electronic device 120 including a housing foldable by a folding axis F is exemplarily illustrated. An operation performed by the wearable device 101 to exchange information with the external electronic device 120 including a straight folding axis F will be described with reference to FIGS. 4 to 12. The embodiment is not limited thereto, and the wearable device 101 may exchange information with an external electronic device 120 that includes a flexible display insertable into a housing based on a rollable structure. In response to deformation of the external electronic device 120 having the rollable structure, an operation performed by the wearable device 101 will be described with reference to FIG. 13.

In the state 191 of FIG. 1, the wearable device 101 may obtain information on a form(or a state) of the external electronic device 120 adjacent to the wearable device 101. In the exemplary state 191 in which the wearable device 101 is connected to the external electronic device 120 including a housing foldable by folding axis F, the information may include an angle of folding axis F. For example, the form of the external electronic device 120 may be parameterized by the angle of folding axis F. Referring to FIG. 1, the user 110 may unfold the flexible display included in the external electronic device 120 by transforming the external electronic device 120. While the user 110 unfolds the external electronic device 120, the wearable device 101 may identify the unfolding of the flexible display facing the user 110. For example, when the angle of folding axis F is included in a preset angle range including 180°, the external electronic device 120 and/or the flexible display may be fully unfolded. Based on identifying the fully unfolded external electronic device 120, the wearable device 101 may move at least one virtual object displayed through a display of the wearable device 101 to the external electronic device 120.

Referring to FIG. 1, as the external electronic device 120 is changed from the state 191 to a fully unfolded state 192, the wearable device 101 may move media content and/or screen displayed in the state 191 to the external electronic device 120. Referring to FIG. 1, the exemplary state 192 in which the wearable device 101 moves the screen 140 in the state 191 to the external electronic device 120 is illustrated. In the state 192, as the screen 140 is moved from the wearable device 101 to the external electronic device 120, media content 160 (e.g., video) that was reproduced through the screen 140 may be displayed on a displaying region 150 formed by the flexible display of the external electronic device 120.

In an embodiment, the wearable device 101 may transmit information (e.g., media content 160) related to the screen 140 to the external electronic device 120, in order to continuously move the screen 140 from the display of the wearable device 101 to the flexible display of the external electronic device 120. The wearable device 101 may transmit a signal including the information to the external electronic device 120, based on a form of the external electronic device 120. The wearable device 101 may move the screen 140 to the external electronic device 120 based on a motion of the user 110 as well as the form of the external electronic device 120.

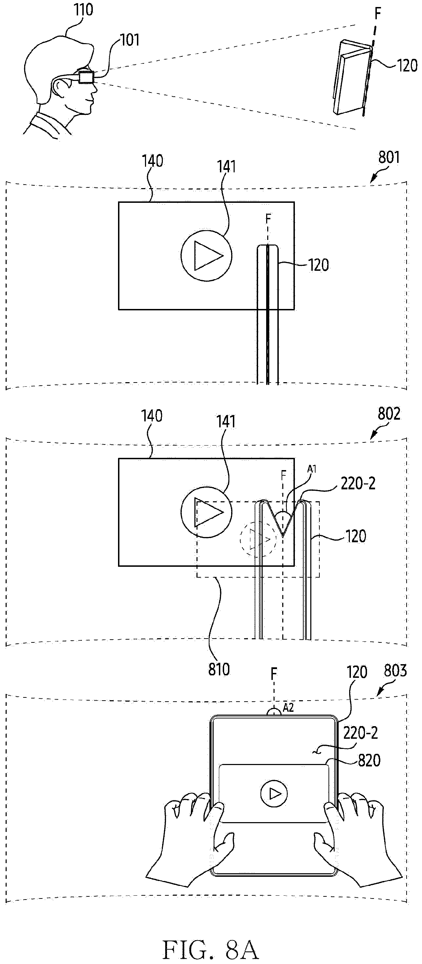

In an embodiment, the motion of the user 110 identified by the wearable device 101 for moving the screen 140 may include a gaze of the user 110 facing a specific virtual object (e.g., the screen 140) and/or a motion of the user 110 moving a specific virtual object into a preset region of the display of the wearable device 101. The wearable device 101 may include a camera disposed toward the user 110's eyes to identify the gaze of the user 110. The wearable device 101 may identify a direction of the gaze by using a form of eyes included in an image of the camera. In the state 191 in which the gaze faces the screen 140, in response to identifying that the external electronic device 120 is fully unfolded, the wearable device 101 may change to the state 192 in which the media content 160 is displayed through the external electronic device 120. An operation in which the wearable device 101 exchanges information between the wearable device 101 and the external electronic device 120 by using the user's gaze will be described with reference to FIGS. 4 to 6, 7A to 7B. An operation in which the wearable device 101 exchanges the information based on a position of the external electronic device 120 will be described with reference to FIGS. 8A to 8B, 9, and 10A to 10B.

As described above, as the external electronic device 120 is unfolded, a state of the wearable device 101 may be changed from the state 191 to the state 192. The embodiment is not limited thereto, and as the external electronic device 120 is folded, the wearable device 101 may move at least one screen displayed through the flexible display of the external electronic device 120 to the display of the wearable device 101. In the state 192 of identifying the fully unfolded external electronic device 120, the wearable device 101 may identify changing of a form of the external electronic device 120, based on information on the form of the external electronic device 120. For example, the wearable device 101 may obtain information for displaying the media content 160 of the displaying region 150 on the display of the wearable device 101, based on identifying that an angle of folding axis F is reduced to less than a threshold angle smaller than 180°. For example, the wearable device 101 may request information related to at least one screen displayed through the displaying region 150 from the external electronic device 120, based on identifying the folding of the external electronic device 120. In response to identifying that the external electronic device 120 is fully folded from the state 192 in which the external electronic device 120 is fully unfolded, the wearable device 101 may display a screen (e.g., the screen 140 of the state 191) for reproducing the media content 160 using the wearable device 101, based on the information. The screen displayed by the wearable device 101 may be displayed in a virtual space and/or a virtual region provided by the wearable device 101.

As described above, according to an embodiment, the wearable device 101 may control movement of information between the external electronic device 120 and the wearable device 101 according to the form of the external electronic device 120. As the information is moved, at least one virtual object (e.g., the screen 140) displayed in the wearable device 101 may be moved to the external electronic device 120. For example, the at least one virtual object that was displayed by the wearable device 101 may be displayed through the external electronic device 120 from the moment when the external electronic device 120 is transformed into a preset form. Similarly, as the information is moved, the media content 160 displayed in the external electronic device 120 may be moved to the wearable device 101. Since the information is moved according to deformation of the external electronic device 120, the wearable device 101 may recognize the deformation of the external electronic device 120 as a gesture for moving the information.

As shown in FIG. 1, in a state identifying of the external electronic device 120 including a flexible display foldable by a folding axis F, the wearable device 101 may compare a form of the external electronic device 120 with a preset form for moving the information, according to an angle by which the flexible display is folded with respect to the folding axis F. The preset form may include a first preset form (e.g., an unfolded form of the external electronic device 120) for moving at least one screen from the wearable device 101 to the external electronic device 120. The preset form may include a second preset form (e.g., a folded form of the external electronic device 120) for moving at least one screen from the external electronic device 120 to the wearable device 101.

Hereinafter, referring to FIG. 2, according to an embodiment, an example of hardware and/or software that the wearable device 101 includes for movement of information between the external electronic device 120 and the wearable device 101 is described.

FIG. 2 illustrates an example of a block diagram of a wearable device 101, according to an embodiment. The wearable device 101 of FIG. 2 may include the wearable device 101 of FIG. 1. An external electronic device 120 of FIG. 2 may include the external electronic device 120 of FIG. 1.

According to an embodiment, the wearable device 101 may include at least one of a processor 210-1, a memory 215-1, a display 220-1, a camera 225, a sensor 230-1, or a communication circuit 240-1. The processor 210-1, the memory 215-1, the display 220-1, the camera 225, the sensor 230-1, and the communication circuit 240-1 may be electronically and/or operably coupled with each other by an electronical component such as a communication bus 202-1. Hereinafter, operational coupling of hardware may mean that a direct or indirect connection between hardware is established by wire or wirelessly, so that a second hardware is controlled by a first hardware among the hardware. Although illustrated through different blocks, embodiments are not limited thereto, and a portion (e.g., at least a portion of the processor 210-1, the memory 215-1 and the communication circuit 240-1) of the hardware of FIG. 2 may be included in a single integrated circuit such as a system on a chip (SoC). The type and/or number of hardware included in the wearable device 101 is not limited to those illustrated in FIG. 2. For example, the wearable device 101 may include only a portion of the hardware illustrated in FIG. 2.

In an embodiment, the processor 210-1 of the wearable device 101 may include hardware for processing data according to one or more instructions. For example, the hardware for processing data may include an arithmetical and logical unit (ALU), a floating point unit (FPU), a field programmable gate array (FPGA), a central processing unit (CPU), and/or an application processor (AP). The processor 210 may have a structure of a single-core processor, or a structure of a multi-core processor such as a dual core, a quad core, or a hexa core.

According to an embodiment, the memory 215-1 of the wearable device 101 may include a hardware component for storing data and/or instructions inputted and/or outputted in the processor 210-1 of the wearable device 101. The memory 215-1 may include a volatile memory such as a random-access memory (RAM) and/or a non-volatile memory such as a read-only memory (ROM). For example, the volatile memory may include at least one of a dynamic RAM (DRAM), a static RAM (SRAM), a Cache RAM, and a pseudo SRAM (PSRAM). For example, the non-volatile memory may include at least one of a programmable ROM (PROM), an erasable PROM (EPROM), an electrically erasable PROM (EEPROM), a flash memory, a hard disk, a compact disk, a solid state drive (SSD), and an embedded multimedia card (eMMC).

In an embodiment, the display 220-1 of the wearable device 101 may output visualized information (e.g., screens of FIGS. 1, 4 to 5, 8A to 8B, 11A to 11C, and/or 12 to 13) to a user (e.g., the user 110 of FIG. 1). For example, the display 220-1 may be controlled by the processor 210-1 including a circuit such as a graphic processing unit (GPU) to output visualized information to the user. The display 220-1 may include a flat panel display (FPD) and/or an electronic paper. The FPD may include a liquid crystal display (LCD), a plasma display panel (PDP), and/or one or more light emitting diode (LED). The LED may include an organic LED (OLED). The display 220-1 of FIG. 2 may include at least one display 1450 to be described later with reference to FIGS. 14A to 14B and/or 15A to 15B.

In an embodiment, the camera 225 of the wearable device 101 may include one or more optical sensors (e.g., a charged coupled device (CCD) sensor, a complementary metal oxide semiconductor (CMOS) sensor) that generate an electrical signal indicating color and/or brightness of light. A plurality of optical sensors included in the camera 225 may be arranged in a form of a 2-dimensional array. The camera 225 may generate 2-dimensional frame data corresponding to light reaching optical sensors of the 2-dimensional array by obtaining electrical signals of each of the plurality of optical sensors substantially simultaneously. For example, photographic data captured using the camera 225 may mean a two-dimensional frame data obtained from the camera 225. For example, video data captured using the camera 225 may mean a sequence of a plurality of 2-dimensional frame data obtained from the camera 225 according to a frame rate. The camera 225 is disposed toward a direction in which the camera 225 receives light, and may further include a flashlight for outputting light in the direction.

Although the camera 225 is illustrated based on a single block, the number of camera 225 included in the wearable device 101 is not limited to the embodiment. The wearable device 101 may include one or more cameras, such as one or more cameras 1440 that will be described later with reference to FIGS. 14A to 14B and/or FIGS. 15A to 15B. The wearable device 101 including a plurality of cameras may obtain information on external environment including the wearable device 101 and a user wearing the wearable device 101 from the plurality of cameras arranged in different directions. For example, the wearable device 101 may obtain a second image with respect to the external environment along with a first image with respect to the user's two eyes. The wearable device 101 may identify a portion of the second image that the user gazes in the second image by using the first image.

According to an embodiment, the sensor 230-1 of the wearable device 101 may generate electronic information that may be processed by the processor 210-1 and/or the memory 215-1 of the wearable device 101 from non-electronic information related to the wearable device 101. The information may be referred to as sensor data. The sensor 230-1 may include a global positioning system (GPS) sensor for detecting a geographic location of the wearable device 101, an image sensor, an illumination sensor and/or a time-of-flight (ToF) sensor, and an inertial measurement unit (IMU) for detecting a physical motion of the wearable device 101.

In an embodiment, the communication circuit 240-1 of the wearable device 101 may include a hardware component to support transmission and/or reception of an electrical signal between the wearable device 101 and the external electronic device 120. For example, the communication circuit 240-1 may include at least one of a MODEM, an antenna, and an optical/electronic (O/E) converter. The communication circuit 240-1 may support transmission and/or reception of the electrical signal by using various types of protocols such as ethernet, local area network (LAN), wide area network (WAN), wireless fidelity (Wi-Fi), Bluetooth, Bluetooth low energy (BLE), ZigBee, long term evolution (LTE), 5G new radio (NR) and/or 6G.

Although not illustrated, according to an embodiment, the wearable device 101 may include an output means for outputting information in a form other than a visualized form. For example, the wearable device 101 may include a speaker for outputting an acoustic signal. For example, the wearable device 101 may include a motor for providing haptic feedback based on vibration.

Referring to FIG. 2, the external electronic device 120 connected or interacting with the wearable device 101 may include at least one of a processor 210-2, a memory 215-2, a display 220-2, a sensor 230-2, or a communication circuit 240-2. The processor 210-2, the memory 215-2, the display 220-2, the sensor 230-2, and the communication circuit 240-2 may be electronically and/or operably coupled with each other by a communication bus 202-2. The processor 210-2, the memory 215-2, the display 220-2, the sensor 230-2, and the communication circuit 240-2 of the external electronic device 120 may correspond to the processor 210-1, the memory 215-1, the display 220-1, the sensor 230-1, and the communication circuit 240-1 of the wearable device 101. In order to reduce repetition of description, among the descriptions of the processor 210-2, the memory 215-2, the display 220-2, the sensor 230-2, and the communication circuit 240-2 of the external electronic device 120, descriptions overlapping the processor 210-1, the memory 215-1, the display 220-1, the sensor 230-1, and the communication circuit 240-1 of the wearable device 101 may be omitted.

According to an embodiment, the wearable device 101 may monitor a form of the external electronic device 120 by communicating with the external electronic device 120 having a deformable structure. Referring to FIG. 2, different exteriors of the external electronic device 120 having a deformable structure are illustrated. The display 220-2 of the external electronic device 120 may include a flexible display for the deformable structure of the external electronic device 120. For example, the external electronic device 120-1 may include a flexible display with a width longer than a height, and a folding axis F formed along a height direction of the flexible display. For example, the external electronic device 120-2 may include a flexible display with a height longer than a width, and a folding axis F formed along a width direction of the flexible display. The sensor 230-2 of the external electronic device 120 (e.g., the external electronic devices 120-1, 120-2) including a straight folding axis F may include a hall sensor. The external electronic device 120 may identify an angle of a housing and/or a flexible display of the external electronic device 120 folded with respect to the folding axis F by using the hall sensor. The external electronic device 120 may transmit information associated with the angle to the wearable device 101 through the communication circuit 240-2.

In an embodiment, the wearable device 101 may monitor a form of the external electronic device 120 by communicating with the external electronic device 120 including a flexible display insertable into the housing. Referring to FIG. 2, different exteriors of the external electronic device with a flexible display insertable into the housing are illustrated, such as external electronic devices 120-3 and 120-4. For example, the external electronic device 120-3 may include a flexible display with a height longer than a width, and may insert or extract the flexible display into the housing along a direction V parallel to the height. For example, the external electronic device 120-4 may include a flexible display with a width longer than a height, and may insert or extract the flexible display into the housing along a direction H parallel to the width. The sensor 230-2 of the external electronic device 120 that includes an actuator (e.g., a motor) for inserting a flexible display into a housing may include a sensor to measure rotation of the actuator. Using information obtained by using the sensor 230-2, the external electronic device 120 may identify information on the form of the flexible display, such as a width, a height, a size, and/or area of the flexible display extracted from the housing. The external electronic device 120 may transmit the information on the form of the flexible display to the wearable device 101 through the communication circuit 240-2. An operation of the wearable device 101 connected to an external electronic device including a flexible display insertable into a housing, such as the external electronic devices 120-3 and 120-4, will be described with reference to FIG. 13.

Referring to an embodiment of FIG. 2, in the memory 215-1 of the wearable device 101, one or more instructions (or commands) indicating calculation and/or operation to be performed by the processor 210-1 of the wearable device 101 on data may be stored. A set of one or more instructions may be referred to as a program, a firmware, an operating system, a process, a routine, a sub-routine, and/or an application. In the following, that an application is installed in an electronic device (e.g., the wearable device 101) may be that one or more instructions provided in a form of an application are stored in the memory 215-1, and may mean that the one or more applications are stored in an executable format (e.g., a file with an extension specified by an operating system of the wearable device 101) by the processor of the electronic device. According to an embodiment, the wearable device 101 may execute one or more instructions stored in the memory 215-1 to perform operations of FIGS. 3, 6, 7A to 7B, 9, and/or 10A to 10B.

Referring to FIG. 2, programs installed in the wearable device 101 may be classified into any one layer of the different layers including an application layer 260, a framework layer 270, and/or a hardware abstraction layer (HAL) 250, based on a target. For example, within the hardware abstraction layer 250, programs (e.g., driver) designed to target hardware (e.g., the display 220-1, the camera 225, the sensor 230-1, and/or the communication circuit 240-1) of the wearable device 101 may be classified. For example, within the framework layer 270, programs (e.g., a gaze tracker 271, a gesture tracker 272, a motion tracker 273, an external space recognizer 274 and/or an external electronic device controller 275) designed to target at least one of the hardware abstraction layer 250 and/or the application layer 260 may be classified. Programs classified as the framework layer 270 may provide an application programming interface (API) executable by another program.

Referring to FIG. 2, within the application layer 260, a program designed to target a user (e.g., the user 110 of FIG. 1) who controls the wearable device 101 may be classified. For example, a program classified as the application layer 260 may include at least one of an application 261 for playing and/or streaming video, an application 262 for video conference, an application 263 for browsing media content 280 (e.g., an image and/or video) of the memory 215-1, or an application 264 for call connection. The embodiment is not limited thereto. For example, the program classified as the application layer 260 may cause execution of a function supported by programs classified as the framework layer 270, by calling the API.

Referring to FIG. 2, the wearable device 101 may process information related to a gaze of a user wearing the wearable device 101 based on execution of the gaze tracker 271 in the framework layer 270. For example, the wearable device 101 may obtain an image including eye of the user from the camera 225. The wearable device 101 may identify a direction of the user's gaze by using a position and/or a direction of pupil included in the image.

Referring to FIG. 2, the wearable device 101 may identify a motion of a preset body part including hand based on execution of the gesture tracker 272 in the framework layer 270. For example, the wearable device 101 may obtain an image and/or video including the body part from the camera 225. The wearable device 101 may identify a gesture performed by the preset body part, by using a motion and/or a posture of the preset body part shown by the image and/or video.

Referring to FIG. 2, the wearable device 101 may identify a motion of the wearable device 101 based on execution of the motion tracker 273 in the framework layer 270. In a state in which the wearable device 101 is worn by the user, the motion of the wearable device 101 may be related to a motion of the user's head. For example, the wearable device 101 may identify a direction of the wearable device 101, which substantially matches a direction of the head. The wearable device 101 may identify the motion of the wearable device 101 by using sensor data of the sensor 230-1 including the IMU.

Referring to FIG. 2, the wearable device 101 may obtain information with respect to an external space that includes the wearable device 101 or is adjacent to the wearable device 101, based on execution of the external space recognizer 274 in the framework layer 270. The wearable device 101 may obtain the information by using the camera 225 and/or the sensor 230-1. Referring to FIG. 2, in a state in which the external space recognizer 274 is executed, the wearable device 101 may identify a virtual space mapped to the external space by using the information obtained by the external space recognizer 274. The wearable device 101 may identify a location and/or a direction of the wearable device 101 in the external space, based on the execution of the external space recognizer 274. For example, the wearable device 101 may perform simultaneous localization and mapping (SLAM) to recognize an external space and a location of the wearable device 101 within the external space, based on execution of the external space recognizer 274 and/or the motion tracker 273.

Referring to FIG. 2, according to an embodiment, the wearable device 101 may execute a function for identifying and/or controlling an external electronic device by using the external electronic device controller 275. The function may include a function (e.g., pairing) of establishing a communication link between the wearable device 101 and the external electronic device 120 using the communication circuit 240-1. The function may include a function of monitoring a form of the external electronic device 120 by using the camera 225 and/or the communication link. The function may include a function of moving information outputted through the display 220-1 of the wearable device 101 to the display 220-2 of the external electronic device 120. The function may include a function of moving information outputted through the display 220-2 of the external electronic device 120 to the display 220-1 of the wearable device 101. In a state in which the external electronic device controller 275 is executed, the wearable device 101 may execute a function of moving information between the displays 220-1 and 220-2 based on a form of the external electronic device 120. An operation performed by the wearable device 101 based on execution of the external electronic device controller 275 will be described with reference to FIG. 3.

In an embodiment, the information moved or transferred between the wearable device 101 and the external electronic device 120 may include information related with media content 280, such as music, image, and/or video. The information moved or transferred between the wearable device 101 and the external electronic device 120 may include information for executing at least one of the applications 261, 262, 263, and 264. The information may include text indicating a location (e.g., a location of network and/or the memory 215-1) of the media content 280 and/or applications, such as uniform resource identifier (URI). The URI may include a uniform resource location (URL), uniform resource name (URN), Uniform Resource Characteristics (URC), or a combination thereof. In drawings and descriptions described later, the information and/or URI transmitted between the wearable device 101 and the external electronic device 120 are exemplarily described.

As described above, according to an embodiment, the wearable device 101 may output a user interface (UI) based on a form of the external electronic device 120 on the display 220-1. The wearable device 101 may control movement (e.g., movement from the wearable device 101 to the external electronic device 120) of the media content 280 based on changing of form of the external electronic device 120. Based on the movement, the wearable device 101 may support a user wearing the wearable device 101 to switch a plurality of electronic devices including the external electronic device 120.

Hereinafter, according to an embodiment, an operation in which the wearable device 101 identifies change of a form of the external electronic device 120 and performs in response to the change will be described with reference to FIG. 3.

FIG. 3 illustrates an example of a flowchart of operations performed by a wearable device, according to an embodiment. The wearable device 101 of FIGS. 1 and 2 may perform an operation of the wearable device described with reference to FIG. 3. For example, the wearable device 101 and/or the processor 210-1 of FIG. 2 may perform at least one of operations of FIG. 3. For example, the wearable device may perform at least one of operations of FIG. 3, based on execution of the external electronic device controller 275 of FIG. 2.

Referring to FIG. 3, according to an embodiment, in operation 310, the wearable device may obtain information on a form of an external electronic device. The wearable device may obtain an image from a camera (e.g., the camera 225 of FIG. 2) as an example of the information. The wearable device may identify the external electronic device and a form of the external electronic device from the image. The wearable device may identify the external electronic device and/or the form from the image by performing object recognition with respect to the image. In order to perform the object recognition, the wearable device may include hardware (e.g., a neural processing unit (NPU)) and/or software for driving an artificial neural network. The artificial neural network for performing the object recognition may include a plurality of layers interconnected by an architecture, such as a convolutional neural network (CNN), a recurrent neural network (RNN), and/or a long-short term memory (LSTM).

In an embodiment, the wearable device may identify an angle of a flexible display folded by a folding axis (e.g., the folding axis F of FIGS. 1 to 2), based on identifying the flexible display of the external electronic device from the image. In an embodiment, the wearable device may identify a size of the flexible display of the external electronic device extracted from a housing of the external electronic device, from the image.

In an embodiment, the wearable device may obtain information on a form of the external electronic device from the external electronic device through a communication circuit (e.g., the communication circuit 240-1 of FIG. 2). The information may be transmitted from the wearable device to the external electronic device through a communication link. The communication link may be established based on a wireless communication protocol such as Bluetooth, Wi-Fi direct, and/or near-field communication (NFC). The information obtained by the wearable device from the external electronic device through the communication circuit may be related to a folded angle of the external electronic device. For example, the information may include a numeric value indicating the angle, or an identifier assigned to the form of the external electronic device distinguished by the angle. In an embodiment, the form (or a state) of the external electronic device may be classified as shown in Table 1 by the angle.

**[Table 1]**

| Angle range | Name of form |
|---|---|
| 0 ° or more and 15 ° or less | folded state, closed state, fully folded state |
| 15 ° or more and 80 ° or less | sub folded state, sub closed state, tent state, acute angle state, flipped state, partially closed state |
| 80 ° or more and 110 ° or less | right angle state, flex state, half opened state |
| 110 ° or more and 160 ° or less | sub unfolded state, sub opened state, obtuse angle state, partially unfolded state, partially opened state |
| 160 ° or more and 180 ° or less | unfolded state, sub opened state, straight angle state, fully opened state |

In an embodiment, an intermediate form may include remaining forms distinguished from the folded form and the unfolded form of Table 1. In an embodiment, when the wearable device is connected to an external electronic device including a flexible display insertable into a housing, the information obtained by the wearable device from the external electronic device through a communication circuit may include a size in which the flexible display included in the external electronic device is extracted from the housing of the external electronic device. For example, the information may include an identifier assigned to a form of an external electronic device classified by the size.

Referring to FIG. 3, according to an embodiment, in operation 320, the wearable device may identify whether the external electronic device has been transformed into a first form. The wearable device may identify whether the external electronic device has been transformed into the first form, by using the information of operation 310. The first form of operation 320 may be set to move information visualized by the wearable device from the wearable device to the external electronic device. In a state in which an external electronic device including a folding axis is identified, the first form may include a form in which the folding axis is unfolded by exceeding a preset angle (e.g., a preset angle of 180 ° or less). In a state in which an external electronic device including a flexible display insertable into a housing is identified, the first form may include a form in which the flexible display is extracted from the external electronic device by exceeding a preset size.

Referring to FIG. 3, according to an embodiment, in response to identifying that the external electronic device is transformed into the first form by using the information in operation 310 (320-YES), in operation 330, the wearable device may transmit a first signal for displaying at least one first screen using the external electronic device to the external electronic device. The at least one first screen, which is a screen being displayed through a display of the wearable device, may include media content (e.g., the media content 280 of FIG. 2) or a window provided by an application of the wearable device. For example, the wearable device may transmit the first signal for displaying at least one media content using a flexible display to the external electronic device, based on identifying unfolding of the flexible display of the external electronic device using the information in operation 310. In the above example, the first signal may include the at least one media content, or may include URL of the at least one media content. While the external electronic device is transformed into the first form, the wearable device may display a visual object for guiding or informing of movement of the at least one first screen.

According to an embodiment, in a state identifying that the external electronic device is not transformed into the first form (320-NO), the wearable device may identify whether the external electronic device has been transformed into a second form, based on operation 340. The second form of operation 340 may be set to move information visualized by the external electronic device from the external electronic device to the wearable device. In a state in which an external electronic device including folding axis is identified, the second form may include a form in which the folding axis is folded below a preset angle (e.g., a preset angle of 0 ° or more). In a state in which an external electronic device including a flexible display insertable into a housing is identified, the second form may include a form in which the flexible display is inserted into the external electronic device below a preset size.

Referring to FIG. 3, when the external electronic device is not transformed into either the first form or the second form (340-NO), the wearable device may maintain monitoring of a form of the external electronic device based on operation 310.

Referring to FIG. 3, according to an embodiment, in response to identifying that the external electronic device is transformed into the second form based on the information in operation 310 (340-YES), in operation 350, the wearable device may transmit a second signal for displaying at least one second screen provided by the external electronic device through the display of the wearable device to the external electronic device. The second signal may include a command and/or a request for identifying media content outputted through the external electronic device and/or at least one application executed by the external electronic device. After transmitting the second signal, in response to receiving information on the at least one second screen from the external electronic device, the wearable device may display the at least one second screen through a display (e.g., the display 220-1 of FIG. 2) of the wearable device. For example, in response to receiving one or more packets including at least a portion of the media content, or receiving URL of the media content, the wearable device may display the media content. For example, based on identifying an identifier (e.g., package name) of at least one application executed by the external electronic device, the wearable device may execute the at least one application or display UI for installing the at least one application. While the external electronic device is transformed into the second form, the wearable device may display a visual object for guiding or informing of movement of the at least one second screen.

As described above, according to an embodiment, the wearable device may control movement of a screen between the wearable device and the external electronic device according to a form of the external electronic device. For example, the wearable device identifying the external electronic device transformed into the first form of operation 320 may move at least one first screen of the display of the wearable device to the external electronic device. For example, the wearable device identifying the external electronic device transformed into the second form of operation 340 may move at least one second screen of the display (e.g., a flexible display) of the external electronic device to the wearable device. The wearable device may recognize a motion of transforming the external electronic device as a gesture for moving a screen between the wearable device and the external electronic device.

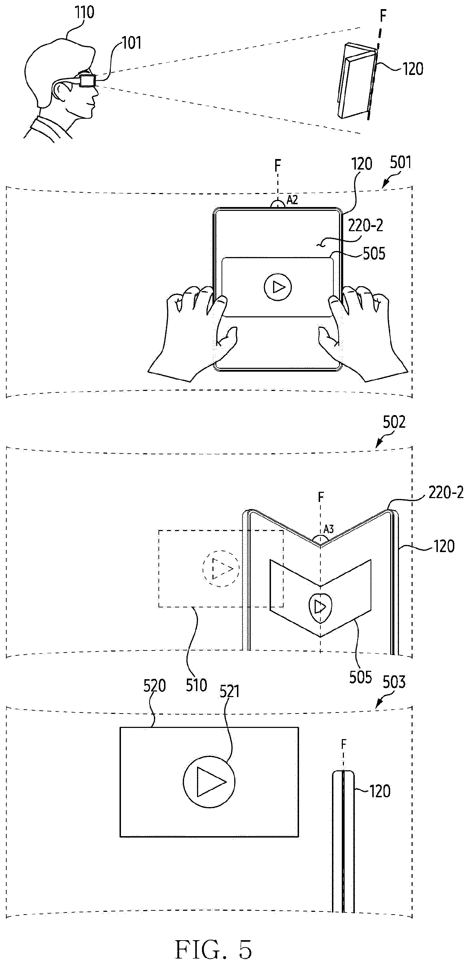

Hereinafter, an operation of the wearable device for the first form of operation 320 and the second form of operation 340 will be described with reference to different drawings. For example, an operation of the wearable device with respect to the external electronic device transformed into the first form of operation 320 will be described with reference to FIGS. 4, 8A, 11A to 11C, 12 and/or 13. For example, an operation of the wearable device with respect to the external electronic device transformed into the second form of operation 340 will be described with reference to FIGS. 5, 8B, and/or 13.

FIG. 4 illustrates an example of an operation in which a wearable device 101 moves media content to an external electronic device 120, according to an embodiment. The wearable device 101 and the external electronic device 120 of FIGS. 1 to 2 may include the wearable device 101 and the external electronic device 120 of FIG. 4. An operation of the wearable device 101 described with reference to FIG. 4 may be related to at least one of the operations of FIG. 3 (e.g., the operation 320 of FIG. 3).

According to an embodiment, referring to FIG. 4, different states 401, 402, and 403 in which the wearable device 101 displays UI through a display (e.g., the display 220-1 of FIG. 2) while the wearable device 101 is connected to an external electronic device 120 foldable by a straight folding axis F are illustrated. The wearable device 101 may identify the external electronic device 120 by using a camera (e.g., the camera 225 of FIG. 2) and/or a communication circuit (e.g., the communication circuit 240-1 of FIG. 2). For example, the wearable device 101 may identify the external electronic device 120 at least partially included in field-of-view (FoV) of a user 110, by using a camera disposed along a direction of eyes of the user 110 wearing the wearable device 101.

Referring to states 401, 402, and 403 of FIG. 4, while the wearable device 101 provides a user experience based on VST, AR, and/or MR, the user 110 may see the external electronic device 120 through a display of the wearable device 101. For example, when the external electronic device 120 is disposed in front of the user 110 (e.g., a direction in which the user 110's eyes face), the wearable device 101 may display an image of a camera disposed facing toward the front to the user 110. Since the image includes the external electronic device 120, the user 110 may see the external electronic device 120 through the display of the wearable device 101. For example, when the wearable device 101 includes a display capable of passing ambient light (e.g., ambient light emitted and/or reflected toward the user 110's eyes), the user 110 may see the external electronic device 120 through transparent portion of the display.

Referring to FIG. 4, in a state 401 in which the external electronic device 120 viewed through the display using a camera is identified, the wearable device 101 may obtain information on a form of the external electronic device 120. In the state 401 of FIG. 4, it is assumed that the wearable device 101 displays a screen 140 for reproducing media content (e.g., the media content 280 of FIG. 2). The wearable device 101 may display a visual object for controlling reproduction of the media content, such as a play button 141, on the screen 140. In the state 401 of FIG. 4, it is assumed that the external electronic device 120 has a form (e.g., the folded form) folded along a folding axis F. The wearable device 101 may obtain the information by using a signal transmitted from the external electronic device 120 and/or the external electronic device 120 identified by an image of the camera.

In the state 401 of FIG. 4, as the user 110 unfolds the external electronic device 120, the wearable device 101 may switch from state 401 to state 402. In the state 402, the wearable device 101 may identify that an angle A1 of the folding axis F increases by exceeding a first threshold angle (e.g., 15 °). In the state 402 in which deformation of the display 220-2 (e.g., flexible display) of the external electronic device 120 is identified by using information on a form of the external electronic device 120, the wearable device 101 may display a visual object 410 for guiding or informing of movement of the screen 140. For example, the wearable device 101 may display the visual object 410, based on identifying the angle A1 that increases by exceeding the first threshold angle. The visual object 410 may include a line (e.g., a dashed line) having a size and/or location of outline (or boundary line) of the screen 140. In an embodiment, the visual object 410 may be referred to as a visual cue.

According to an embodiment, in the state 402 in which the angle A1 of the folding axis F is increased more than or equal to the first threshold angle, the wearable device 101 may visualize movement of the screen 140 to the external electronic device 120 by using the visual object 410. For example, as the external electronic device 120 is unfolded, the wearable device 101 may identify that the angle A1 increases. As the angle A1 increases, the wearable device 101 may move the visual object 410 from the screen 140 toward the external electronic device 120. For example, when the angle A1 of the folding axis F matches the first threshold angle, the wearable device 101 may begin to display the visual object 410 having a size and/or a location matching the outline of the screen 140. Then, as the angle A1 continues to increase, the wearable device 101 may move the visual object 410 along a direction D1. As the angle A1 increases, the wearable device 101 may change a size of the visual object 410 according to a size of the external electronic device 120 viewed through the display. In the exemplary state 402 of FIG. 4, in which the size of the external electronic device 120 viewed through the display is smaller than a size of the screen 140, as the angle A1 increases, the wearable device 101 may gradually reduce the size of the visual object 410.

According to an embodiment, a form, a size, and/or a location of the visual object 410 displayed by the wearable device 101 are not limited to the exemplary operation of FIG. 4. The visual object 410 may flicker by a preset interval by the wearable device 101. The wearable device 101 may guide movement of the screen 140 to the external electronic device 120 by not only displaying the visual object 410, but also changing the size and/or location of the screen 140. The wearable device 101 may visualize movement of the screen 140 from the wearable device 101 to the display 220-2 of the external electronic device 120 by using a linear change of the visual object 410 and/or the screen 140 with respect to the angle A1. As in the state 402 of FIG. 4, the wearable device 101 may linearly move the visual object 410 between the screen 140 and the display 220-2 according to the angle A1. For example, as the angle A1 increases from the first threshold angle, the wearable device 101 may gradually move the visual object 410 to the display 220-2. A mode of the wearable device 101 in which the visual object 410 is displayed, such as the state 402, may be referred to as a transition mode.

According to an embodiment, the wearable device 101 may enter the transition mode by using a direction of a gaze of the user 110 wearing the wearable device 101. The wearable device 101 may identify the direction of the gaze by using an image that is identified through a camera and includes eyes of the user 110. In a state in which a direction of the gaze toward the screen 140 is identified, the wearable device 101 may display the visual object 410 and enter the transition mode, based on identifying that the angle A1 of the external electronic device 120 increases above the first threshold angle. For example, in a state in which a direction of the gaze toward a point spaced apart from the screen 140 is identified, the wearable device 101 may restrict displaying the visual object 410, and/or may not enter the transition mode, independently of the angle A1 of the external electronic device 120.

According to an embodiment, in the state 402 guiding movement of media content reproduced through the screen 140 and/or the screen 140 using the visual object 410, the wearable device 101 may transmit information for moving the screen 140 and/or the media content to the external electronic device 120. The information may include media content reproduced through the screen 140, or may include an address (e.g., URL) in a network of the media content. The wearable device 101 may transmit information (e.g., information on timing of the media content reproduced through the screen 140) for continuous reproduction of the media content to the external electronic device 120, together with the address. The wearable device 101 may transmit information on an application related to the screen 140 to the external electronic device 120. The information may include information for identifying or installing the application. The operation that the wearable device 101 transmits the information to the external electronic device 120 may be performed, in response to identifying an angle A1 of folding axis F matching a preset threshold angle. The preset threshold angle may be an angle (e.g., 160 °) corresponding to the first threshold angle or exceeding the first threshold angle.

In the state 402 of FIG. 4, as the user 110 continues to unfold the external electronic device 120, the wearable device 101 may switch from the state 402 to the state 403. In the state 403, the wearable device 101 may display the screen 420 corresponding to the screen 140 through the display 220-2 of the external electronic device 120, by controlling the external electronic device 120. The wearable device 101 may enter the state 403 based on whether an angle A2 of folding axis F corresponds to a preset form (e.g., the first form of FIG. 3). For example, based on identifying that the angle A2 is included in a preset angle range including 180 ° (e.g., straight angle), the wearable device 101 may enter the state 403 and cause the external electronic device 120 to display the screen 420. The preset angle range may be classified by a threshold angle of 180 ° or 180 ° or less. The wearable device 101 entering the state 403 may at least temporarily cease to display the screen 140 via a display (e.g., the display 220-1 of FIG. 2) of the wearable device 101.

Referring to the state 403 of FIG. 4, since display of the screen 140 through the display of the wearable device 101 is stopped and the screen 420 corresponding to the screen 140 is displayed through the display 220-2 of the external electronic device 120, the user 110 may recognize movement of media content (e.g., media content reproduced through the screen 140) from the wearable device 101 to the external electronic device 120. In the state 403 in which movement of the screen 140 from the wearable device 101 to the external electronic device 120 is completed, the wearable device 101 may at least temporarily cease to display the visual object 410 for guiding or informing of movement of the screen 140.

In the state 403 in which media content corresponding to the screen 140 is moved from the wearable device 101 to the external electronic device 120, the wearable device 101 may display the display 220-2 of the external electronic device 120. For example, a wearable device 101 displaying an image obtained from a camera based on VST may display a portion corresponding to the display 220-2 in the image to a user 110 wearing the wearable device 101. In order to display the portion to the user 110, the wearable device 101 may restrict and/or stop synthesizing a virtual object to the portion in the image. For example, a wearable device 101 blocking ambient light based on AR and/or MR may make transparency of a portion between eye of the user 110 wearing the wearable device 101 and the display 220-2 into preset transparency (e.g., substantially 100% transparency), in lens of the wearable device 101. According to the preset transparency, light emitted from the display 220-2 may pass through the lens of the wearable device 101 and propagate to the user 110's eyes. In an embodiment, the wearable device 101 that moves media content corresponding to the screen 140 to the external electronic device 120 may enter a power saving mode (or a sleep mode), and display a visual object (e.g., a pop-up window including preset text such as "Take off HMD") to guide attachment and detachment of the wearable device 101.

As described above, according to an embodiment, the wearable device 101 may identify deformation of the display 220-2 (e.g., flexible display) of the external electronic device 120 by using information on a form of the external electronic device 120. Based on identifying the deformation, the wearable device 101 may display the visual object 410 for guiding or informing of movement of at least one media content on a display (e.g., the display 220-1 of FIG. 2) of the wearable device 101. While the visual object 410 is displayed (e.g., the state 402), the wearable device 101 may execute a function for moving at least one media content between the wearable device 101 and the external electronic device 120, based on the deformation of the display 220-2. The function may be executed based on identifying the user 110's gaze facing the screen 140 displayed by the wearable device 101. The user 110 may move the screen 140 displayed through the wearable device 101 to the display 220-2 of the external electronic device 120 distinguished from the wearable device 101, by executing the function. According to an embodiment, based on movement of the screen 140, the wearable device 101 may sequentially switch between states 401, 402, and 403 based on unfolding of the external electronic device 120.

Hereinafter, according to an embodiment, an operation performed by the wearable device 101 based on folding of the external electronic device 120 will be described with reference to FIG. 5.

FIG. 5 illustrates an example of an operation in which a wearable device 101 moves media content displayed through an external electronic device 120 to the wearable device 101, according to an embodiment. The wearable device 101 and the external electronic device 120 of FIGS. 1 to 2 may include the wearable device 101 and the external electronic device 120 of FIG. 5. An operation of the wearable device 101 described with reference to FIG. 5 may be related to at least one of the operations (e.g., the operation 340 of FIG. 3) of FIG. 3.

Referring to FIG. 5, according to an embodiment, exemplary states 501, 502, and 503 in which the wearable device 101 is connected to the external electronic device 120 foldable by a straight folding axis F are illustrated. As shown in the state 403 of FIG. 4, the state 501 of FIG. 5 may include a state that allows the wearable device 101 to display the display 220-2 of the external electronic device 120. In the state 501 of FIG. 5, the wearable device 101 may identify the external electronic device 120 and/or the display 220-2 of the external electronic device 120 viewed to the user 110 through a display (e.g., the display 220-1 of FIG. 2) of the wearable device 101. In the state 501 of FIG. 5, it is assumed that the external electronic device 120 displays a screen 505 including media content by using the display 220-2.

In the state 501 of FIG. 5, the wearable device 101 may obtain information on a form of the external electronic device 120. The wearable device 101 may obtain the information by using an image including the external electronic device 120 and/or a communication link between the external electronic device 120 and the wearable device 101. The wearable device 101 may monitor the form of the external electronic device 120, using the information. In the state 501 of FIG. 5, it is assumed that the wearable device 101 identifies an external electronic device 120 in which an angle A2 of folding axis F is 180 °.

In the state 501 of FIG. 5, as the external electronic device 120 is folded, the wearable device 101 may switch from the state 501 to the state 502. In the state 502, the wearable device 101 may identify that an angle A3 of folding axis F is reduced to less than a second threshold angle (e.g., 160 °). In the state 502 identifying folding axis F folded below the second threshold angle, the wearable device 101 may display a visual object 510 for guiding or informing of movement of the screen 505. In an embodiment, the visual object 510 may be referred to as a visual cue. Referring to FIG. 5, a visual object 510 with a form of a quadrangular dashed line is illustrated as an example, but the embodiment is not limited thereto. The visual object 510 may flicker based on a preset interval by the wearable device 101. In the state 502 displaying the visual object 510, the wearable device 101 may change a location, form, color, and/or size of the visual object 510, by using information (e.g., the angle A3 of folding axis F) on the form of the external electronic device 120. For example, as the angle A3 decreases, the wearable device 101 may gradually increase a size of the visual object 510. For example, as the angle A3 is reduced, the wearable device 101 may linearly move the visual object 510 toward a preset position (e.g., center) of the display of the wearable device 101. As shown in the state 502, a mode of the wearable device 101 in which the visual object 510 is displayed may be referred to as a transition mode.

According to an embodiment, the wearable device 101 may enter the transition mode according to a direction of the user 110's gaze. For example, the wearable device 101 may enter the transition mode based on identifying a direction of a gaze spaced apart from the screen 505 and/or the display 220-2. For example, the wearable device 101 may enter the transition mode based on identifying a direction of a gaze toward the visual object 510. For example, when the direction of the gaze toward the screen 505 and/or the display 220-2 is identified, the wearable device 101 may stop and/or restrict displaying of the visual object 510, and/or may not enter the transition mode.

In the state 502 guiding movement of media content reproduced through the screen 505 and/or the screen 505 by using the visual object 510, according to an embodiment, the wearable device 101 may request information related to the screen 505 from the external electronic device 120. For example, the wearable device 101 may request information for identifying media content reproduced through the screen 505 to the external electronic device 120. For example, the wearable device 101 may request information to identify at least one application executed by the external electronic device 120 to provide the screen 505, to the external electronic device 120. The wearable device 101 may obtain the information by communicating with the external electronic device 120 in the transition mode. In an embodiment, the wearable device 101 may display the visual object 510 or enter the transition mode, based on obtaining information on the screen 505 from the external electronic device 120.

In the state 502 of FIG. 5, as the user 110 continues to fold the external electronic device 120, the wearable device 101 may switch from the state 502 to the state 503. In the state 503, the wearable device 101 may display a screen 520 corresponding to the screen 505 displayed through the display 220-2 through a display (e.g., the display 220-1 of FIG. 2) of the wearable device 101, by controlling the external electronic device 120. The wearable device 101 may enter the state 503 based on whether the angle A3 of folding axis F corresponds to a preset form (e.g., the second form of FIG. 3). For example, the wearable device 101 may display the screen 520 by entering the state 503, based on identifying that the angle A3 is included in a preset angle range including 0 °. The preset angle range may be classified by 0 ° and/or a threshold angle of 0 ° or more. The wearable device 101 entering the state 503 may transmit a signal for stopping at least temporarily display of the screen 505 through the display 220-2 of the external electronic device 120, to the external electronic device 120.

In the state 503 of FIG. 5, the wearable device 101 may display a screen 520 floating in field of view (FoV) of the user 110. Since display of the screen 505 through the display 220-2 of the external electronic device 120 is stopped, and the screen 520 corresponding to the screen 505 is displayed through a display of the wearable device 101, the user 110 may recognize movement of media content (e.g., media content reproduced through the screen 505) from the external electronic device 120 to the wearable device 101. In the state 503 in which movement of the screen 505 from the external electronic device 120 to the wearable device 101 is completed, the wearable device 101 may cease to display the visual object 510 for guiding or informing of movement of the screen 404.

As described above, according to an embodiment, in the state in which the external electronic device 120 including folding axis F is identified, the wearable device 101 may identify an angle at which a flexible display (e.g., the display 220-2) of the external electronic device 120 is folded by folding axis F. As described above with reference to FIG. 4, the wearable device 101 identifying that the angle increases may move information (e.g., the screen 140 and/or media content reproduced through the screen 140 of FIG. 4) from the wearable device 101 to the external electronic device 120. As described above with reference to FIG. 5, the wearable device 101 identifying that the angle is reduced may move information (e.g., the screen 505 and/or media content reproduced through the screen 505 of FIG. 5) from the external electronic device 120 to the wearable device 101.

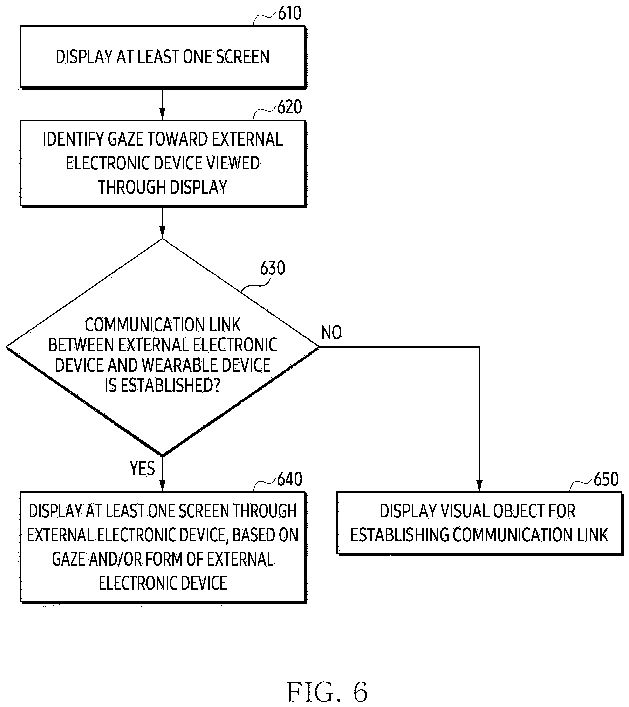

Hereinafter, according to an embodiment, an operation performed by the wearable device 101 by a direction of the user 110's gaze and/or a form of the external electronic device 120 is described with reference to FIG. 6.

FIG. 6 illustrates an example of a flowchart of operations performed by a wearable device, according to an embodiment. The wearable device 101 of FIGS. 1 to 2 may include the wearable device of FIG. 6. An operation of the wearable device described with reference to FIG. 6 may be performed by the wearable device 101 and/or the processor 210-1 of FIG. 2. The operation of the wearable device of FIG. 6 may be related to at least one of the operations (e.g., the operation 310 of FIG. 3) of FIG. 3. The operation of the wearable device of FIG. 6 may be related to the operation of the wearable device 101 of FIGS. 4 to 5.

Referring to FIG. 6, according to an embodiment, in operation 610, the wearable device may display at least one screen. The at least one screen may be displayed by execution of at least one of applications 261, 262, 263, and 264 classified as the application layer 260 of FIG. 2. The at least one screen displayed by the wearable device may include media content (e.g., media content 280 of FIG. 2) stored in a memory (e.g., the memory 215-1 of FIG. 2) of the wearable device or streamed through a communication circuit (e.g., the communication circuit 240-1 of FIG. 2).

Referring to FIG. 6, according to an embodiment, in operation 620, the wearable device may identify a gaze toward an external electronic device (e.g., the external electronic device 120 of FIGS. 1 to 5) viewed through a display (e.g., the display 220-1 of FIG. 2). The wearable device may identify a gaze of operation 620 by using an image for eyes of a user wearing the wearable device. The wearable device may obtain the image by controlling a camera (e.g., the camera 225 of FIG. 2). The wearable device may identify the gaze by using a positional relationship between pupil and iris identified from the image.

Referring to FIG. 6, according to an embodiment, in operation 630, the wearable device may determine whether a communication link between the external electronic device and the wearable device is established. In a state in which a direction of a gaze toward the external electronic device is identified based on operation 620, the wearable device may identify whether the communication link is established. When the communication link of operation 630 is not established (630-NO), the wearable device may display a visual object for establishing a communication link based on operation 650. The visual object may include a pop-up window, text, and/or icon for guiding or informing of establishment of the communication link. In response to an input for selecting the visual object, the wearable device may initiate establishment of the communication link. For example, the wearable device may establish the communication link by using pairing. In an embodiment, the wearable device may perform operation 640 based on establishment of the communication link.

According to an embodiment, in a state in which the communication link of operation 630 is established (630-YES), the wearable device may perform operation 640 to display at least one screen of operation 610 through an external electronic device, by using a gaze and/or a form of the external electronic device. For example, as described above with reference to FIG. 4, the wearable device may perform operation 640 according to a direction of the gaze toward the at least one screen and deformation of the external electronic device based on folding.

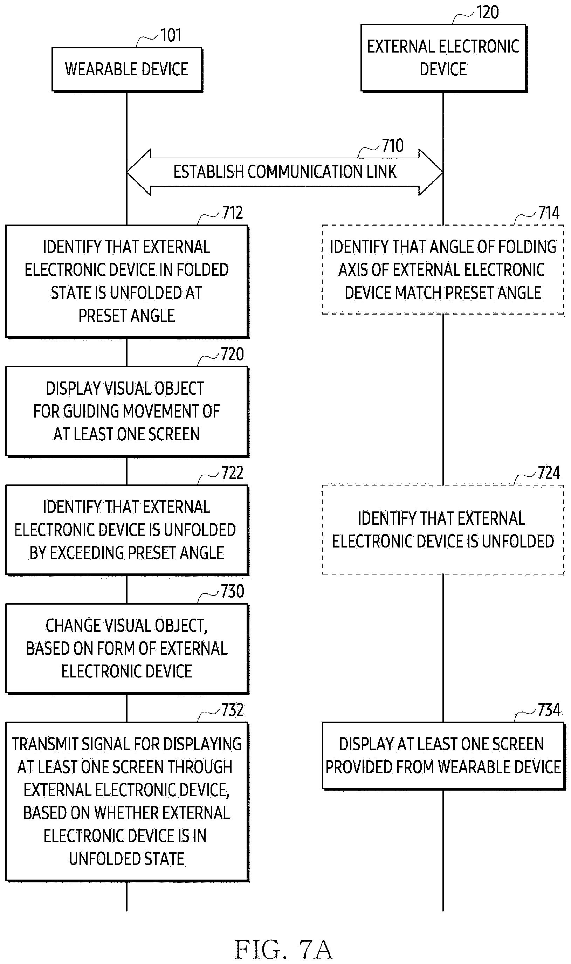

As described above, according to an embodiment, by using a direction of the gaze of a user wearing the wearable device, the wearable device may identify the user's intention for interacting with an external electronic device. Based on the intention, the wearable device may activate a communication link between the external electronic device and the wearable device. By using the activated communication link, the wearable device may perform movement of information between the external electronic device and the wearable device. Hereinafter, an operation in which the wearable device performs movement of the information based on operation 640 will be described with reference to FIGS. 7A to 7B.

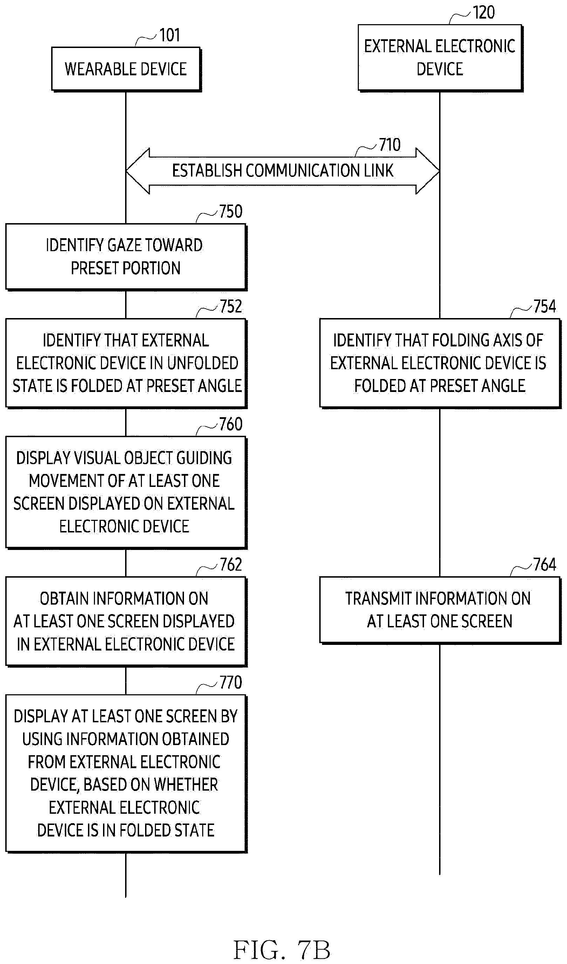

FIGS. 7A to 7B illustrate an example of a signal flowchart between a wearable device 101 and an external electronic device 120, according to an embodiment. The wearable device 101 and the external electronic device 120 of FIGS. 1 to 2 may include the wearable device 101 and the external electronic device 120 of FIGS. 7A to 7B. At least one of operations of the wearable device 101 of FIGS. 7A to 7B may be performed by the wearable device 101 and/or the processor 210-1 of FIG. 2. At least one of operations of the external electronic device 120 of FIGS. 7A to 7B may be performed by the external electronic device 120 and/or the processor 210-2 of FIG. 2. An operation of the wearable device 101 and the external electronic device 120 of FIG. 7A may be related to the operation of the wearable device 101 and the external electronic device 120 described with reference to FIG. 4. An operation of the wearable device 101 and the external electronic device 120 of FIG. 7B may be related to the operation of the wearable device 101 and the external electronic device 120 described with reference to FIG. 5.

Referring to FIGS. 7A to 7B, according to an embodiment, in operation 710, the wearable device 101 may establish a communication link with the external electronic device 120. The operation 710 may include at least one of the operations of FIG. 6. The wearable device 101 may establish a communication link of the operation 710 by using a communication circuit (e.g., the communication circuit 240-1 of FIG. 2). At least one of the operations of FIGS. 7A to 7B may be performed in a state in which a communication link of operation 710 is established.

Referring to FIG. 7A, according to an embodiment, in operation 712, the wearable device 101 may identify that an external electronic device 120 in a folded state is unfolded at a preset angle (e.g., a first threshold angle such as 15 °). In an embodiment, the wearable device 101 may identify unfolding of the operation 712 based on a form of the external electronic device 120 identified through a camera (e.g., the camera 225 of FIG. 2). In an embodiment, the wearable device 101 may perform operation 712 by using a communication link of operation 710. For example, in operation 714, the external electronic device 120 may transmit information indicating an angle of folding axis to the wearable device 101 through a communication link, based on identifying that the angle of the folding axis of the external electronic device matches the preset angle. Operations 712 and 714 of FIG. 7A may be related to the operation 310 of FIG. 3.

Referring to FIG. 7A, according to an embodiment, in operation 720, the wearable device 101 may display a visual object for guiding or informing of movement of at least one screen. In a state in which a direction of a gaze toward at least one screen is identified, the wearable device 101 may perform operation 720. The visual object may include the visual object 410 of FIG. 4. According to an embodiment, after displaying the visual object in operation 720, in operation 722, the wearable device 101 may identify that the external electronic device 120 is unfolded by exceeding a preset angle. The wearable device 101 may identify unfolding of the external electronic device 120 by using an image including the external electronic device 120. The embodiment is not limited thereto, and in operation 724, the external electronic device 120 may identify unfolding of the external electronic device 120. In response to identification of unfolding, the external electronic device 120 may transmit information indicating unfolding of the external electronic device 120 to the wearable device 101. The information may be transmitted from the external electronic device 120 to the wearable device 101 based on occurrence of a preset event corresponding to the unfolding. The information may include data on an angle of folding axis measured by the external electronic device 120 and/or a form of the flexible display of the external electronic device 120 classified by the angle. In operations 714 and 724, the external electronic device 120 may identify an angle of folding axis of the external electronic device 120, by using data of a sensor (e.g., the sensor 230-2 of FIG. 2). The external electronic device 120 may perform at least one of the operations 714 and 724, based on the angle.

According to an embodiment, in the state of identifying the external electronic device 120 unfolded by exceeding a preset angle, the wearable device 101 may change a visual object by performing operation 730, according to a form of the external electronic device. For example, the wearable device 101 may change a form, size, and/or location of a visual object of operation 720 by using a form of the external electronic device 120. As described above with reference to FIG. 4, as an angle of folding axis of the external electronic device 120 increases, the wearable device 101 may move the visual object in a direction from at least one screen displayed by the wearable device 101 toward the flexible display of the external electronic device 120. The wearable device 101 may change a size of the visual object according to a size of the flexible display of the external electronic device 120, based on the increase in the angle.

As the external electronic device 120 is unfolded, a state of the external electronic device 120 may be switched into an unfolded state. Referring to FIG. 7A, according to an embodiment, in operation 732, the wearable device 101 may transmit a signal for displaying at least one screen by using the external electronic device, based on whether the external electronic device 120 is in the unfolded state. The signal may include information for continuously moving the at least one screen being displayed by the wearable device 101 to the external electronic device 120. For example, the signal may include URL of media content included in the at least one screen displayed by the wearable device 101. The URL may include a parameter indicating a time interval of the media content reproduced in the wearable device 101, together with addresses for accessing the media content on a network (e.g., the Internet). For example, the signal may include at least a portion of the media content. For example, the signal may include information for executing and/or installing an application that provides the at least one screen displayed by the wearable device 101. The wearable device 101 transmitting a signal of operation 732 may at least temporarily cease to display at least one screen corresponding to the signal and/or a visual object of operation 720.

Referring to FIG. 7A, in operation 734, the external electronic device 120 may display at least one screen provided from the wearable device 101. In response to receiving a signal of operation 732, the external electronic device 120 may continuously display the at least one screen displayed by the wearable device 101 as shown in the screen 420 of FIG. 4. The external electronic device 120 may identify whether the at least one screen displayed through the wearable device 101 includes media content displayable by the external electronic device 120, by using the signal of operation 732. The external electronic device 120 may identify at least one application corresponding to the at least one screen displayed through the wearable device 101 by using the signal of operation 732. When the at least one application is not installed in the external electronic device 120, the external electronic device 120 may display UI for installing the at least one application.

In an embodiment of FIG. 7A, as the external electronic device 120 is unfolded, the external electronic device 120 may display a UI (e.g., a lock screen) for obtaining biometric information, a personal identification number (PIN) and/or a password. The external electronic device 120 may bypass displaying the UI and display at least one screen of operation 734, based on a user account logged in the wearable device 101 transmitting a signal of operation 732. For example, when the user account logged in to the wearable device 101 matches a user account registered in the external electronic device 120, the external electronic device 120 may bypass displaying of the UI. The embodiment is not limited thereto, and the external electronic device 120 may perform operation 734 based on user authentication based on the UI. Alternatively, the external electronic device 120 may bypass displaying the UI and perform operation 734, based on the signal of operation 732.

Referring to FIG. 7B, in a state in which the communication link of operation 710 is established, the wearable device 101 may identify a gaze toward a preset portion based on operation 750. The wearable device 101 may perform operation 750 while an external electronic device in an unfolded state is viewed through a display. For example, the wearable device 101 may identify a gaze toward a portion spaced apart from the external electronic device viewed through the display.

The wearable device 101 identifying a gaze of operation 750 may identify that the external electronic device 120 in unfolded state is folded at a preset angle based on operation 752. The wearable device 101 may identify deformation (e.g., the folding of the external electronic device 120 in operation 752) of the external electronic device 120, by using an image of a camera. The embodiment is not limited thereto, and the wearable device 101 may identify folding of the external electronic device 120 by using information (e.g., data of the sensor 230-2 of FIG. 2) received from the external electronic device 120 through a communication link. For example, in operation 754, the external electronic device 120 may identify that folding axis of the external electronic device 120 is folded at a preset angle. The external electronic device 120 identifying that the folding axis is folded at the preset angle may transmit a signal to inform that the external electronic device 120 is folded at the preset angle to the wearable device 101. The wearable device 101 may perform operation 752, by using the signal.

The wearable device 101 identifying that the external electronic device 120 is folded at the preset angle may display a visual object guiding movement of at least one screen displayed on the external electronic device 120 by performing operation 760. A visual object of operation 760 may include the visual object 510 of FIG. 5. According to an embodiment, after displaying the visual object of operation 760, in operation 762, the wearable device 101 may obtain information on at least one screen displayed on the external electronic device 120. The wearable device 101 may request the external electronic device 120 to transmit information on the at least one screen by using the communication link of operation 710. The external electronic device 120 receiving the request may transmit information on at least one screen (e.g., the screen 505 of FIG. 5) to the wearable device 101, by performing operation 764.

As the external electronic device 120 is folded, the state of the external electronic device 120 may be switched into a folded state. Referring to FIG. 7B, according to an embodiment, in operation 770, the wearable device 101 may display at least one screen by using information obtained from the external electronic device 120, based on whether the external electronic device 120 is in a folded state. For example, the wearable device 101 obtaining information of operation 762 may identify whether at least one screen displayed by the external electronic device 120 may be displayed by the wearable device 101, by using the information. For example, the wearable device 101 may identify whether media content included in the at least one screen may be outputted by the wearable device 101. The wearable device 101 may identify whether the media content may be outputted by the wearable device 101 by using a format of the media content and/or a type of application capable of executing the media content. For example, the wearable device 101 may identify whether at least one application providing at least one screen displayed by the external electronic device 120 is installed in the wearable device 101, by using information of operation 762. When the at least one application is not installed in the wearable device 101, the wearable device 101 may display UI for installing the at least one application. After the at least one application is installed by the UI, the wearable device 101 may display the at least one screen based on operation 770.

Referring to FIGS. 7A to 7B, at least one screen may be moved between the wearable device 101 and the external electronic device 120 according to deformation of the external electronic device 120. In order to control the movement, the wearable device 101 may monitor a form of the external electronic device 120 by using a camera of the wearable device 101 and/or a communication link of the operation 710. In order to control the movement, the wearable device 101 may request information on at least one screen displayed through a display (e.g., the display 220-2 of FIG. 2) of the external electronic device 120, by transmitting information on at least one screen displayed through a display (e.g., the display 220-1 of FIG. 2) of the wearable device 101 to the external electronic device 120, or communicating with the external electronic device 120.

As described above with reference to FIGS. 4 to 6, 7A to 7B, the wearable device 101 may control movement of at least one screen according to a direction of a gaze of a user wearing the wearable device 101, together with a form of the external electronic device 120. The embodiment is not limited thereto, and the wearable device 101 may control movement of the at least one screen according to a positional relationship between the external electronic device 120 and the wearable device 101. Hereinafter, according to an embodiment, an operation in which the wearable device 101 moves at least one screen between the external electronic device 120 and the wearable device 101 by using the positional relationship will be described with reference to FIGS. 8A to 8B, 9, 10A to 10B.

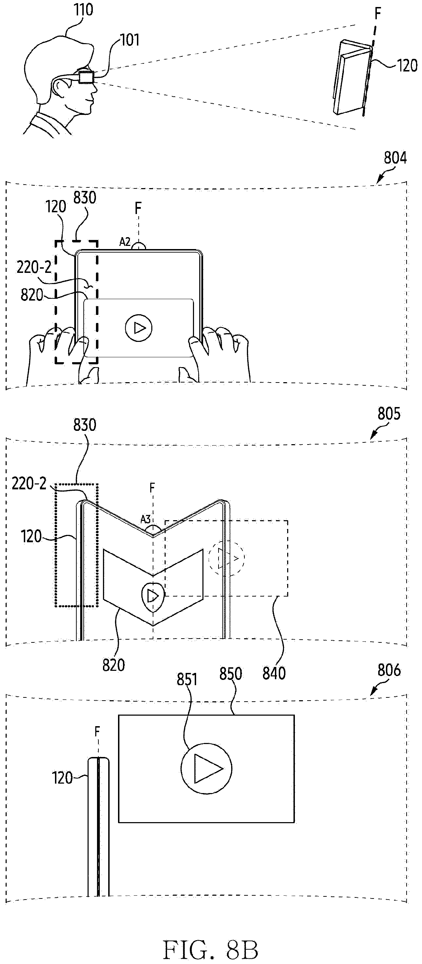

FIGS. 8A to 8B illustrate an example of an operation performed by a wearable device 101 by using a form of an external electronic device 120, according to an embodiment. The wearable device 101 and the external electronic device 120 of FIGS. 1 to 2 may include the wearable device 101 and the external electronic device 120 of FIGS. 8A to 8B. Operation of the wearable device 101 described with reference to FIG. 8A may be related to at least one of the operations of FIG. 3 (e.g., operation 320 of FIG. 3). Operation of the wearable device 101 described with reference to FIG. 8B may be related to at least one of the operations of FIG. 3 (e.g., operation 340 of FIG. 3).

Referring to FIG. 8A, according to an embodiment, different states 801, 802, and 803 in which the wearable device 101 displays UI through a display (e.g., the display 220-1 of FIG. 2) while the wearable device 101 is connected to the external electronic device 120 foldable by a straight folding axis F are illustrated. The wearable device 101 worn on a head of the user 110 may identify the external electronic device 120 by using a camera disposed along a direction of eyes of the user. The wearable device 101 may establish a communication link with the external electronic device 120 based on at least one of the operations of FIG. 6. The wearable device 101 may obtain information on a form of the external electronic device 120 through the camera and/or the communication link.

Referring to FIG. 8A, in a state 801 in which the external electronic device 120 folded by folding axis F is identified, the wearable device 101 may display a screen 140 for reproducing media content (e.g., the media content 280 of FIG. 2). In the state 801 in which the screen 140 is displayed, the wearable device 101 may identify a position of the external electronic device 120 with respect to the screen 140. The position of the external electronic device 120 with respect to the screen 140 may be identified by a position of the external electronic device 120 identified through a camera of the wearable device 101. For example, the wearable device 101 may identify whether the external electronic device 120 overlaps the screen 140 by using a distance between the external electronic device 120 and the screen 140 viewed through a display (e.g., the display 220-1 of FIG. 2) of the wearable device 101. For example, the wearable device 101 may enter a transition mode, based on identifying that a distance between a point (e.g., a center of the screen 140) of the screen 140 and a point (e.g., a center of the external electronic device 120 viewed through a display) of the external electronic device 120 on the display of the wearable device 101 is less than a preset threshold. As shown in the state 801 of FIG. 8A, based on identifying that at least a portion of the external electronic device 120 overlaps the screen 140 on the display of the wearable device 101, the wearable device 101 may execute a function for moving the screen 140 to the external electronic device 120 according to a form of the external electronic device 120.

Referring to FIG. 8A, in the state 801 in which the external electronic device 120 is at least partially overlapped with the screen 140, the wearable device 101 may enter the state 802 based on identifying unfolding of the external electronic device 120. In the state 802 of identifying that an angle A1 of folding axis F increases by exceeding a first threshold angle (e.g., 15 °), the wearable device 101 may display a visual object 810 based on a transition mode. Although the visual object 810 including a quadrangular dashed line is exemplary illustrated, the embodiment is not limited thereto. According to an embodiment, the wearable device 101 may change a position, a form, color, and/or a size of the visual object 810 according to the angle A1 of folding axis F. Similar to the visual object 410 of FIG. 4, the wearable device 101 may move the visual object 810 to the external electronic device 120 based on the increase in the angle A1. As the angle A1 increases, the wearable device 101 may adjust a size of the visual object 810 to a size of the display 220-2 of the external electronic device 120. As the angle A1 is reduced, the wearable device 101 may adjust a size of the visual object 810 to a size of the screen 140.

According to an embodiment, in the state 802 guiding movement of the screen 140 and/or media content included in the screen 140 by using the visual object 810, the wearable device 101 may transmit information for moving the screen 140 and/or the media content to the external electronic device 120. For example, in response to identifying that the angle A1 of folding axis F matches another threshold angle (e.g., 160 °) exceeding the first threshold angle, the wearable device 101 may transmit the information to the external electronic device 120. The wearable device 101 may insert at least a portion of the media content into payload of a packet transmitted to the external electronic device 120. The wearable device 101 may insert URL of the media content into the packet. The wearable device 101 may insert information (e.g., information on a timing of the media content reproduced by the wearable device 101) for continuous reproduction of the media content, together with the URL. The wearable device 101 may transmit an identifier of an application corresponding to the screen 140 and/or an identifier (e.g., an activity name) of a window corresponding to the screen 140 from among a plurality of windows provided from the application, to the packet.

In the state 802 guiding movement of the screen 140 by using the visual object 810, the wearable device 101 may cease to move media content to the external electronic device 120, based on reduction of the angle A1 of folding axis F. In the state 802, the wearable device 101 may cease to move media content to the external electronic device 120, based on identifying the external electronic device 120 that is moved to a location different from the screen 140. When the media content is not moved according to reduction of the angle A1 of folding axis F and/or movement of the external electronic device 120, the wearable device 101 may cease to display the visual object 810 by switching to the state 801.

In response to identifying that external electronic device 120 is fully unfolded, the wearable device 101 may switch from the state 802 guiding movement of the screen 140 by using the visual object 810 to the state 803. The wearable device 101 may enter the state 803, based on identifying that an angle A3 of folding axis F substantially matches 180 °. In the state 803, the wearable device 101 may display a screen 820 corresponding to the screen 140 displayed through the wearable device 101 before the state 803, through the display 220-2 of the external electronic device 120, by controlling the external electronic device 120. In the state 803 of controlling the external electronic device 120 to display the screen 820, the wearable device 101 may at least temporarily cease to display the screen 140 and/or the visual object 810.

In the state 803 in which media content is moved from the wearable device 101 to the external electronic device 120 by controlling visibilities of the screens 140 and 810, the wearable device 101 may allow displaying the external electronic device 120 through the display of the wearable device 101. For example, in an image displayed on the display of the wearable device 101, the wearable device 101 may stop and/or restrict synthesizing a portion in which the external electronic device 120 is captured with a virtual object. As synthesis of the virtual object is stopped, the wearable device 101 may form a punctured region in VR and display the external electronic device 120 through the region.

As described above, in a state in which the external electronic device 120 is viewed through a preset portion for displaying media content, such as the screen 140, the wearable device 101 may identify deformation of the external electronic device 120 by using information on a form of the external electronic device 120. Based on the deformation, the wearable device 101 may control movement of the media content. The wearable device 101 may transmit information for continuously outputting the media content to the external electronic device 120. While identifying the deformation of the external electronic device 120, the wearable device 101 may display a visual object 810 for guiding or informing of movement of the media content. The user 110 wearing the wearable device 101 may recognize media content moved from the wearable device 101 to the external electronic device 120, based on sequential switching of states 801, 802, and 803 of FIG. 8A. Similar to operation of the wearable device 101 based on unfolding of the external electronic device 120 described with reference to FIG. 8A, the wearable device 101 may identify folding of the external electronic device 120.

Referring to FIG. 8B, according to an embodiment, while the external electronic device 120 including folding axis F is unfolded, different states 804, 805, and 806 of the UI displayed by the wearable device 101 are illustrated. In the state 804, the wearable device 101 may identify an external electronic device 120 having an angle A2 of folding axis F substantially matched to 180°. The wearable device 101 may identify the angle A2 based on object recognition of an image of a camera (e.g., the camera 225 of FIG. 2), or identify the angle A2 through a communication link between the wearable device 101 and the external electronic device 120. The wearable device 101 may identify the screen 820 displayed through the display 220-2 of the external electronic device 120 and/or media content included in the screen 820.

Referring to FIG. 8B, in the state 804 of identifying that the external electronic device 120 is fully unfolded, the wearable device 101 may determine whether to enter a transition mode by using a location of the external electronic device 120. For example, the wearable device 101 may enter the transition mode, based on whether the external electronic device 120 viewed through a display (e.g., the display 220-2 of FIG. 2) of the wearable device 101 overlaps a preset portion 830 of the display. An exemplary state 804 in which a preset portion 830 is formed on a left side of a displaying region formed by the display is illustrated, but the embodiment is not limited thereto. The wearable device 101 may adjust or customize a position, size, and/or form of the portion 830 based on a user input. In an embodiment, the wearable device 101 may display that the external electronic device 120 overlaps the portion 830 by adjusting transparency and/or color of the portion 830.

In the state 804 of FIG. 8B, in response to identifying the external electronic device 120 overlapped to the portion 830 of the display of the wearable device 101, the wearable device 101 may enter the state 805. For example, the wearable device 101 may switch to the state 805 based on identifying the external electronic device 120 overlapped by exceeding the portion 830 and a preset time. While the external electronic device 120 overlaps the portion 830, the wearable device 101 may execute a function for moving the screen 820 of the external electronic device 120 to the wearable device 101, based on a form of the external electronic device 120. Based on entering the state 805, the wearable device 101 may display a visual object 840 for guiding or informing of movement of the screen 820. Similar to the visual object 510 of FIG. 5, the wearable device 101 may adjust a size, a form, color, and/or a position of the visual object 840 by using the angle A3 of folding axis F of the external electronic device 120. For example, as the angle A3 is reduced, the wearable device 101 may move the visual object 840 in a direction away from the external electronic device 120 viewed through the display of the wearable device 101. For example, as the angle A3 is reduced, the wearable device 101 may gradually change a size of the visual object 840 to a size (e.g., a size of the screen 850) different from the size of the display 220-2 and/or the screen 820. In the state 805, the wearable device 101 may obtain and/or request information for moving the screen 820 from the external electronic device 120.

In the state 805 of guiding movement of the screen 820 by using the visual object 840, the wearable device 101 may monitor deformation of the external electronic device 120. The wearable device 101 may switch from the state 805 to the state 806, based on identifying that the angle A3 of folding axis F of the external electronic device 120 matches substantially 0 °. In the state 806, the external electronic device 120 may be fully folded. In the state 806 identifying that the external electronic device 120 is fully folded, the wearable device 101 may display a screen 850 corresponding to the screen 820 that was displayed on the display 220-2 of the external electronic device 120 through the display of the wearable device 101. For example, the screen 850 displayed by the wearable device 101 may include media content included in the screen 820 that was displayed by the external electronic device 120. A first timing of the media content reproduced through the screen 850 may match a second timing of the media content reproduced through the screen 820, or may be after the second timing. For example, the screen 850 may be provided by an application that was executed by the external electronic device 120 to provide the screen 820. In the state 806 displaying the screen 850, the wearable device 101 may transmit a signal for informing display of the screen 850 or switching a mode of the external electronic device 120 to a preset mode (e.g., lock mode and/or sleep mode), to the external electronic device 120.

As described above, according to an embodiment, the wearable device 101 may move the screen 820 displayed through the external electronic device 120 to the wearable device 101, based on folding of the external electronic device 120. Based on the movement, the wearable device 101 may continuously display information of the display 220-2 that is covered by folding of the external electronic device 120. Since the wearable device 101 performs movement of the screen 820 in response to deformation of the external electronic device 120, the wearable device 101 may not require an input different from the deformation.

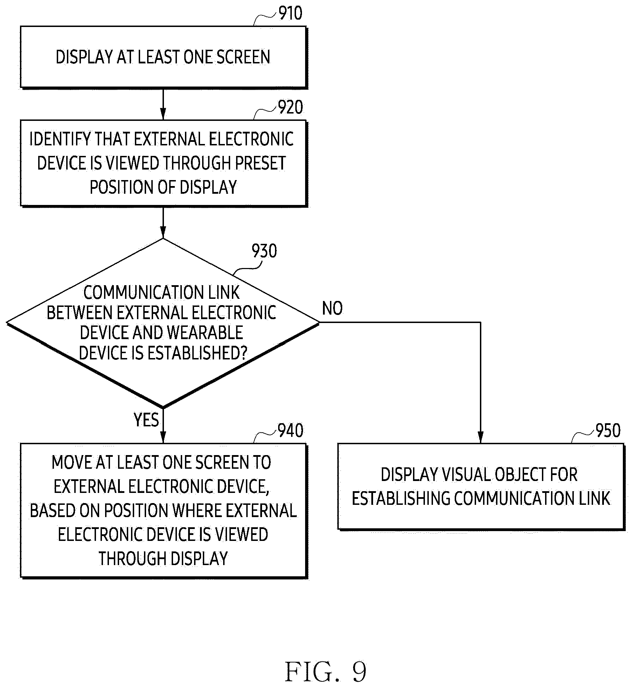

Hereinafter, according to an embodiment, an operation performed by the wearable device 101 based on a location and/or a form of the external electronic device 120 will be described with reference to FIG. 9.

FIG. 9 illustrates an example of a flowchart of operations performed by a wearable device, according to an embodiment. The wearable device 101 of FIGS. 1 to 2 may include the wearable device of FIG. 9. An operation of the wearable device described with reference to FIG. 9 may be performed by the wearable device 101 and/or the processor 210-1 of FIG. 2. An operation of the wearable device of FIG. 9 may be related to at least one (e.g., the operation 310 of FIG. 3) of the operations of FIG. 3. An operation of the wearable device of FIG. 7 may be related to the operation of the wearable device 101 of FIG. 9.

Referring to FIG. 9, according to an embodiment, in operation 910, the wearable device may display at least one screen. The wearable device may perform operation 910 similar to the operation 610 of FIG. 6. For example, the wearable device may display at least one screen of the operation 910, based on execution of at least one application installed in the wearable device. The wearable device may display at least one screen including media content stored in a memory (e.g., the memory 215-1 of FIG. 2) or streamed through a communication circuit (e.g., the communication circuit 240-1 of FIG. 2).

Referring to FIG. 9, according to an embodiment, in operation 920, the wearable device may identify that the external electronic device is viewed through a preset position of the display (e.g., the display 220-1 of FIG. 2). The preset position may be included in a portion where at least one screen of operation 910 is viewed in a displaying region formed by the display of the wearable device. The preset position may be included in a region set on the displaying region for movement of information between the wearable device and the external electronic device, as shown in the portion 830 of FIG. 8B.

According to an embodiment, in a state of identifying the external electronic device viewed through the preset position of the display of the wearable device, the wearable device may identify whether a communication link between the external electronic device and the wearable device is established, by performing operation 930. The wearable device may perform operation 930 of FIG. 9 similar to operation 630 of FIG. 6. When the communication link of operation 930 is not established (930-NO), the wearable device may display a visual object for establishing a communication link, based on operation 950. The visual object may include a pop-up window, text, and/or an icon to guide establishment of the external electronic device and/or the communication link. The wearable device may perform operation 950 of FIG. 9 similar to operation 650 of FIG. 6. For example, in response to an input related to the visual object, the wearable device may establish a communication link with the external electronic device. In response to establishment of the communication link, the wearable device may perform operation 940.

According to an embodiment, in a state in which the communication link of operation 930 is established (930-YES), the wearable device may move at least one screen to the external electronic device, based on a position where the external electronic device is viewed through a display, by performing operation 940. As described above with reference to FIG. 8A, the wearable device may identify deformation of the external electronic device at least partially overlapped with at least one screen of operation 910. The wearable device identifying the deformation may transmit information for moving at least one screen of operation 910 to the external electronic device. The information may include data (e.g., identifier of an application providing the at least one screen, and/or URL of at least one media content included in the at least one screen) for continuously displaying the at least one screen by using the external electronic device. Movement of the at least one screen of operation 940 may be performed by using a communication link established based on operations 930 and 950. For example, the exemplified data may be transmitted from the wearable device to the external electronic device through the communication link.

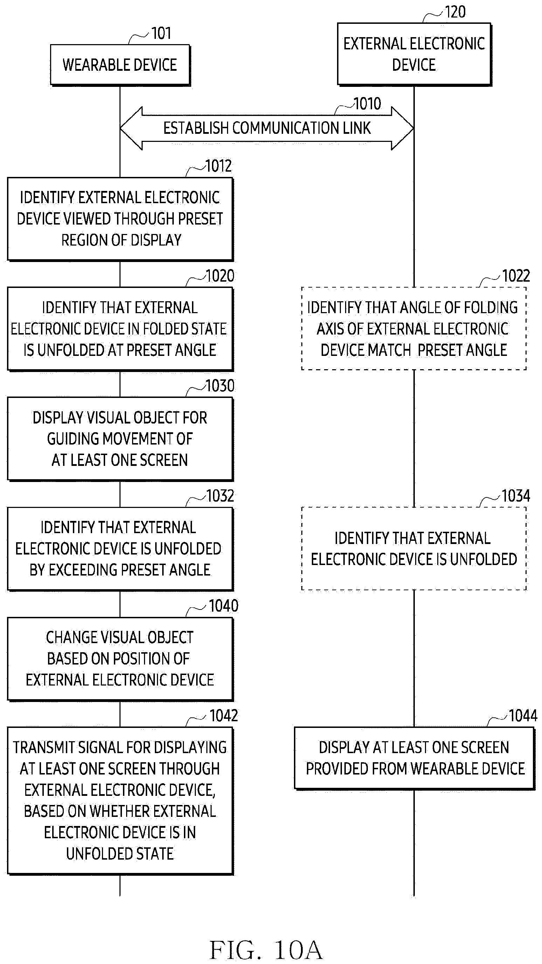

As described above, according to an embodiment, by using a motion (e.g., a user's gaze and/or a user's motion with respect to the external electronic device) of a user wearing the wearable device, the wearable device may identify the user's intention for moving information between the wearable device and the external electronic device. For example, in response to identifying a gaze toward a screen to be moved from the wearable device to the external electronic device, and/or the external electronic device overlapped on the screen, the wearable device may move the screen to the external electronic device based on deformation of the external electronic device. Hereinafter, referring to FIGS. 10A to 10B, an operation in which the wearable device moves at least one screen based on operation 940 will be described.

FIGS. 10A to 10B illustrate an example of a signal flowchart between a wearable device 101 and an external electronic device 120, according to an embodiment. The wearable device 101 and the external electronic device 120 of FIGS. 1 to 2 may include the wearable device 101 and the external electronic device 120 of FIGS. 10A to 10B. At least one of operations of the wearable device 101 of FIGS. 10A to 10B may be performed by the wearable device 101 and/or the processor 210-1 of FIG. 2. At least one of operations of the external electronic device 120 of FIGS. 10A to 10B may be performed by the external electronic device 120 and/or the processor 210-2 of FIG. 2. FIGS. 10A to 10B may correspond to FIGS. 8A to 8B, respectively.

Referring to FIGS. 10A to 10B, according to an embodiment, in operation 1010, the wearable device 101 may establish a communication link. The operation 1010 may include at least one of the operations of FIGS. 6 and/or 9. The wearable device 101 may establish a communication link of the operation 1010, by communicating with the external electronic device 120 by using a communication circuit (e.g., the communication circuit 240-1 of FIG. 2). At least one of the operations of FIGS. 10A to 10B may be performed in a state in which the communication link of the operation 1010 is established.

Referring to FIG. 10A, according to an embodiment, in operation 1012, the wearable device 101 may identify an external electronic device viewed through a preset region of a display (e.g., the display 220-1 of FIG. 2). The preset region in operation 1012 may include at least one screen of the wearable device 101 and/or a portion where at least one media content is displayed. For example, in the state 801 of FIG. 8A, the preset region in operation 1012 may include a portion of a displaying region in which the screen 140 is disposed.

According to an embodiment, in a state in which the external electronic device 120 viewed through the preset region in operation 1012 is identified, the wearable device may identify that the external electronic device 120 in a folded state is unfolded at a preset angle in the operation 1020. For example, in response to identifying the external electronic device 120 that is viewed by exceeding the preset time in a preset region, the wearable device 101 may identify unfolding of the operation 1020. The wearable device 101 may obtain information on a form of the external electronic device 120 by using a camera (e.g., the camera 225 of FIG. 2) and/or a communication link of the operation 1010. The information may include a numeric value indicating an angle of folding axis (e.g., the folding axis F of FIG. 8A) included in the external electronic device 120. The wearable device 101 may identify unfolding of the external electronic device 120, based on identifying that the angle increases by exceeding 0 ° and/or a threshold angle exceeding 0 °.

Referring to FIG. 10A, in operation 1022, the external electronic device 120 may identify that an angle of folding axis of the external electronic device 120 matches a preset angle. The external electronic device 120 may monitor an angle of folding axis of the external electronic device 120 by using a sensor (e.g., the sensor 230-2 of FIG. 2). Based on identifying that a monitored angle increases by exceeding 0 ° and/or a threshold angle exceeding 0 °, the external electronic device 120 may transmit a signal indicating unfolding of the external electronic device 120 to the wearable device 101. The wearable device 101 receiving the signal may identify unfolding of operation 1020.

Referring to FIG. 10A, according to an embodiment, in operation 1030, the wearable device 101 may display a visual object for guiding or informing of movement of at least one screen. The wearable device 101 may perform operation 1030 based on identifying unfolding of the external electronic device 120 of operation 1020. A visual object in operation 1030 may include the visual object 810 of FIG. 8A. According to an embodiment, after displaying the visual object in operation 1030, the wearable device 101 may identify that the external electronic device 120 is unfolded by exceeding a preset angle, by performing operation 1032. The preset angle of operation 1030 may be an angle exceeding 0 ° and include a threshold angle for distinguishing an unfolded state of the external electronic device 120.

In an embodiment, unfolding of the external electronic device 120 may be identified by the external electronic device 120 as well as the wearable device 101. For example, in operation 1034, the external electronic device 120 may identify that the external electronic device 120 is unfolded, by using a sensor of the external electronic device 120. The external electronic device 120 identifying unfolding of operation 1034 may transmit a signal indicating unfolding of the external electronic device 120 to the wearable device 101. The wearable device 101 receiving the signal may identify that the external electronic device 120 is unfolded in operation 1032. The signal may include an angle of folding axis measured by the external electronic device 120.

According to an embodiment, in a state identifying that the external electronic device 120 is unfolded by exceeding of the preset angle, the wearable device 101 may change a visual object of operation 1030 according to a position of the external electronic device 120, by performing operation 1040. While the external electronic device 120 is unfolded, the wearable device 101 may guide movement of at least one screen based on the unfolding, by changing a position, a form, color, and/or a size of the visual object of operation 1030. For example, as the external electronic device 120 is unfolded, the wearable device 101 may reduce a distance between the external electronic device 120 and the visual object. For example, as the external electronic device 120 is folded, the wearable device 101 may increase the distance.

Referring to FIG. 10A, according to an embodiment, in operation 1042, the wearable device 101 may transmit a signal for displaying at least one screen by using an external electronic device, based on whether the external electronic device is in unfolded state. The wearable device 101 may transmit a signal of operation 1042 to the external electronic device 120, based on identifying that an angle of folding axis of the external electronic device 120 substantially matches 180 °. The signal may include information for continuously moving at least one screen displayed by the wearable device 101 to the external electronic device 120. For example, the signal may include information on at least one media content included in the at least one screen (e.g., a portion of the media content and/or URL in which the media content is stored). The wearable device 101 may transmit the signal including an identifier of at least one application executed by the wearable device 101 to provide at least one screen. In operation 1042, the wearable device 101 may at least temporarily cease to display at least one screen. While the external electronic device 120 is unfolded, the at least one screen may be displayed through the external electronic device 120 instead of the wearable device 101.

Referring to FIG. 10A, in operation 1044, the external electronic device 120 may display at least one screen provided from the wearable device. In response to receiving a signal transmitted from the wearable device 101 in operation 1042, the external electronic device 120 may display at least one screen corresponding to the signal through a display (e.g., the display 220-2 of FIG. 2) of the external electronic device 120. As the external electronic device 120 is unfolded according to operation 1024, a display (e.g., flexible display) of the external electronic device 120 may be viewed to a user wearing the wearable device 101. In operation 1044, the wearable device 101 may display at least one screen being displayed by the wearable device 101 through the display, which is viewed by the user, of the external electronic device 120. Therefore, the user of the wearable device 101 may view the at least one screen through the display of the external electronic device 120.

Referring to FIG. 10A, in order to display at least one screen in operation 1044, the external electronic device 120 may perform one or more operations for unlocking the external electronic device 120. For example, the external electronic device 120 may display UI for inputting biometric information, PIN, and/or password through a display of the external electronic device 120. In an embodiment, the external electronic device 120 may bypass performing operation of authenticating a user, by display the UI or using the UI, based on a signal of operation 1042. In an embodiment, the external electronic device 120 may perform operation 1044 more quickly, in response to unfolding of the external electronic device 120, based on the bypass. In an embodiment, when one user is commonly logged in to the wearable device 101 transmitting the signal and the external electronic device 120, the external electronic device 120 may bypass display of the UI and perform operation 1044.

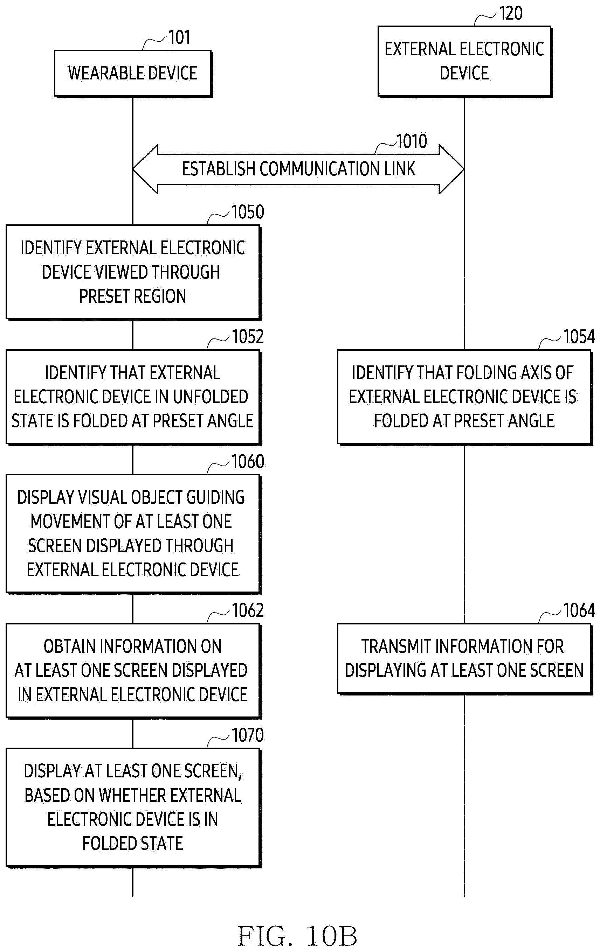

Referring to FIG. 10B, according to an embodiment, in a state in which a communication link of operation 1010 is established, the wearable device 101 may identify an external electronic device 120 viewed through a preset region in operation 1050. The preset region of operation 1050 may include the portion 830 of FIG. 8B. The wearable device 101 identifying the external electronic device 120 viewed through the preset region may identify that the external electronic device in unfolded state is folded at a preset angle in operation 1052. The wearable device 101 may identify deformation of the external electronic device 120, by using an image with respect to the external electronic device 120 at least partially overlapping the preset region. The preset angle of operation 1052 may be included in an angle range (e.g., a preset angle range including 0 °) for distinguishing a folded state of the external electronic device 120.

Referring to FIG. 10B, in operation 1054, the external electronic device 120 may identify that folding axis of the external electronic device 120 is folded at a preset angle. The external electronic device 120 may identify the external electronic device 120 is folded, by using a sensor (e.g., the sensor 230-2 of FIG. 2, including a hall sensor) for measuring the angle of the folding axis. Based on identifying that the external electronic device 120 is folded, the external electronic device 120 may transmit a signal for informing folding of the external electronic device 120 to the wearable device 101. The wearable device 101 may perform operation 1052 by using the signal.

Referring to FIG. 10B, according to an embodiment, in operation 1060, the wearable device 101 may display a visual object guiding movement of at least one screen displayed in the external electronic device 120. The visual object of operation 1060 may include the visual object 840 of FIG. 8B. While identifying that the external electronic device 120 is folded, the wearable device 101 may guide movement of the at least one screen, by changing the visual object in operation 1060. For example, as an angle of folding axis of the external electronic device 120 is reduced, the wearable device 101 may increase a distance between the visual object and the external electronic device 120. As the angle of folding axis of the external electronic device 120 increases, the wearable device 101 may reduce the distance. Based on display of the visual object of operation 1060, the wearable device 101 may enter a transition mode.

Referring to FIG. 10B, according to an embodiment, in operation 1062, the wearable device 101 may obtain information on at least one screen displayed through an external electronic device. The wearable device 101 may request the information on the at least one screen from the external electronic device 120 by using the communication link of operation 1010. In response to request for the information, the external electronic device 120 may transmit information for displaying at least one screen by perform operation 1064. The information may include data for continuously displaying at least one screen displayed through a display (e.g., the display 220-2 of FIG. 2) of the external electronic device 120 by using the wearable device 101. For example, the information may include data on URL and/or reproduction time of media content included in the at least one screen. For example, the information may include data on at least one application executed by the external electronic device 120 to provide the at least one screen.

After operation 1052, the external electronic device 120 may be switched into a folded state by folding axis substantially folded at 0 °. In operation 1070 of FIG. 10B, according to an embodiment, the wearable device 101 may display at least one screen based on whether the external electronic device is in a folded state. The at least one screen of operation 1070 may be related to information obtained by using operation 1062. For example, the wearable device 101 may output at least one screen displayed through the external electronic device 120, through a display of the wearable device 101, by performing operation 1070. When information obtained by operation 1062 includes data on URL and/or reproduction time of the media content included in the at least one screen of the external electronic device 120, the wearable device 101 may reproduce the media content by using the information. When information obtained by operation 1062 includes data on at least one application executed by the external electronic device 120 to provide the at least one screen, the wearable device 101 may execute the at least one application or display UI for installing the at least one application.

As described above with reference to FIGS. 8A to 8B, 9, and 10A to 10B, the wearable device 101 may control movement of at least one screen, by using a position of the external electronic device 120 in a displaying region formed by a display of the wearable device 101 together with a form of the external electronic device 120. The wearable device 101 may move the screen by using a location and/or transformation of the external electronic device 120 without requiring a gesture set for moving the screen between the external electronic device 120 and the wearable device 101.

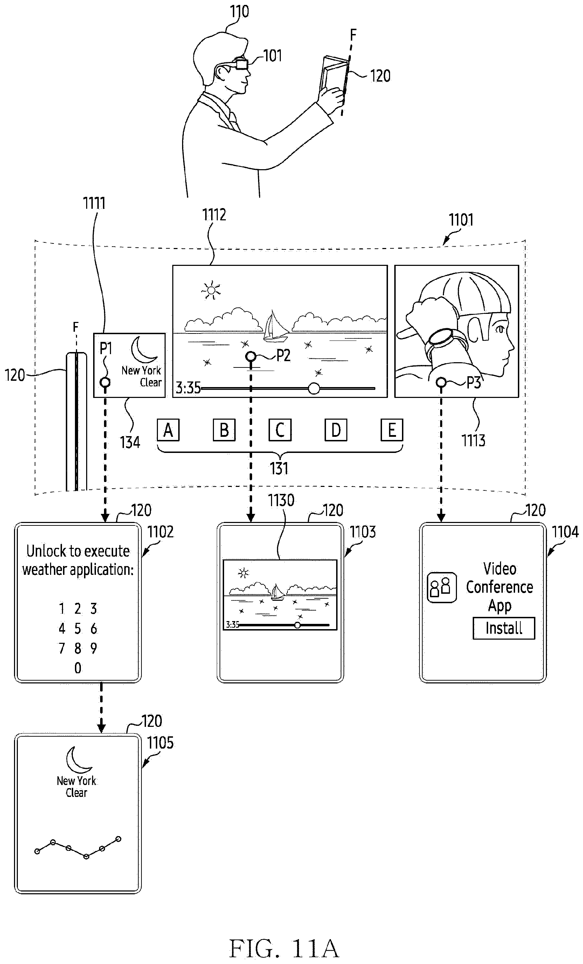

Hereinafter, according to an embodiment, an operation in which the wearable device 101 moves one or more screens to the external electronic device 120 will be described with reference to FIGS. 11A to 11C.

FIGS. 11A to 11C illustrate an example of an operation in which a wearable device 101 moves at least one application by using a form of an external electronic device 120, according to an embodiment. The wearable device 101 of FIGS. 1 to 2 may include the wearable device 101 and the external electronic device 120 of FIGS. 11A to 11C. An operation of the wearable device 101 described with reference to FIGS. 11A to 11C may be related to at least one (e.g., operation 320 of FIG. 3) of the operations of FIGS. 3.

Referring to FIG. 11A, an exemplary state 1101 in which the wearable device 101 is connected to the external electronic device 120 foldable by a straight folding axis F is illustrated. In the state 1101, a user 110 wearing the wearable device 101 may view the external electronic device 120 through a displaying region formed through a display (e.g., the display 220-1 of FIG. 2) of the wearable device 101. In the state 1101, the wearable device 101 may identify the external electronic device 120 in the folded state, through a camera (e.g., the camera 225 of FIG. 2) and/or a communication circuit (e.g., the communication circuit 240-1 of FIG. 2).

In the state 1101, the wearable device 101 may display one or more screens 1111, 1112, and 1113 in FoV of the user 110 wearing the wearable device 101 by executing one or more applications. For example, the wearable device 101 may display the screen 1111 having a widget form based on execution of an application (e.g., a weather application) for visualizing weather information. For example, the wearable device 101 may display the screen 1112 including a region in which video is reproduced based on execution of an application (e.g., the application 261 of FIG. 2) for streaming video. For example, the wearable device 101 may display the screen 1113 based on execution of an application (e.g., the application 262 of FIG. 2) for video conference. The state 1101 of FIG. 11A is exemplary, and the embodiment is not limited thereto.

According to an embodiment, the wearable device 101 may identify a direction of a gaze of a user 110 wearing the wearable device 101. The wearable device 101 may obtain information (e.g., an image and/or video in which two eyes are captured) indicating the direction of the gaze by using a camera facing the two eyes of the user 110. Using the information, the wearable device 101 may estimate a point at which the user 110 gazes within the user 110's FoV. As described above with reference to FIGS. 4 to 6, 7A to 7B, the wearable device 101 may control movement of a screen between the wearable device 101 and the external electronic device 120, based on the direction of the user 110's gaze and deformation of the external electronic device 120.

Referring to FIG. 11A, in the state 1101 in which the external electronic device 120 in folded state is identified, the wearable device 101 may identify deformation of the external electronic device 120. For example, the wearable device 101 may identify that an angle of folding axis F of the external electronic device 120 increases, by using a camera and/or a communication circuit. While the external electronic device 120 is deformed, the wearable device 101 may move a specific screen in which the user 110's gaze faces among the screens 1111, 1112, and 1113, to a display (e.g., the display 220-2 of FIG. 2) of the external electronic device 120.

Referring to FIG. 11A, in the state 1101, the wearable device 101 that identifies a gaze facing a point P1 within the screen 1111 may transmit information for displaying the screen 1111 to the external electronic device 120, based on unfolding of the external electronic device 120. The state 1102 of the external electronic device 120 of FIG. 11A may be an exemplary state of the external electronic device 120 receiving information for displaying the screen 1111. When the external electronic device 120 is folded, the external electronic device 120 may operate in a preset mode (e.g., lock mode) that requires user authentication to activate the external electronic device 120. After entering the state 1102, in response to the unfolding, the external electronic device 120 in the lock mode may display a screen for releasing the lock mode. Referring to state 1102, the external electronic device 120 may display a screen for receiving a PIN and/or a password. The embodiment is not limited thereto, and the external electronic device 120 may display a screen including text and/or icon guiding an input of biometric information.

Referring to FIG. 11A, in the state 1102 operating based on the lock mode, the external electronic device 120 may switch to a state 1105 by using information for releasing the lock mode. The information for releasing the lock mode may include at least one of PIN, password, and/or biometric information (e.g., iris, fingerprint, and/or vein pattern). In the state 1105, the external electronic device 120 may execute an application corresponding to the screen 1111, by using information received from the wearable device 101. Referring to FIG. 11A, in the state 1105 in which information for displaying the screen 1111 corresponding to an application for providing weather information is received, the external electronic device 120 may display a screen provided from the application through a display of the external electronic device 120. The information received to display the screen 1111 from the wearable device 101 may include an identifier (e.g., package name) of the application executed by the wearable device 101 to provide weather information and/or an identifier of a window corresponding to the screen 1111 among a plurality of windows provided from the application.

Referring to FIG. 11A, in the state 1101, the wearable device 101 that identifies a gaze facing a point P2 within the screen 1112 may transmit information for displaying the screen 1112 to the external electronic device 120, based on unfolding of the external electronic device 120. The state 1103 of the external electronic device 120 of FIG. 11A may be an exemplary state of the external electronic device 120 receiving the information for displaying the screen 1112. According to an embodiment, the external electronic device 120 may bypass a screen for releasing a lock mode and display a screen 1130 corresponding to the screen 1112 by using the information received from the wearable device 101. The external electronic device 120 may display the screen 1130 for continuously outputting media content included in the screen 1112, by using the information. Referring to FIG. 11A, in a state in which the wearable device 101 reproduces a specific timing (e.g., 3 minutes 35 seconds) of media content through the screen 1112, in response to unfolding of the external electronic device 120, the wearable device 101 may transmit information for displaying the media content to the external electronic device 120 according to the specific timing. The external electronic device 120 may output a portion of media content corresponding to the specific timing on the screen 1130, by using the information.

Referring to FIG. 11A, in the state 1101, the wearable device 101 that identifies a gaze facing a point P3 in the screen 1113 may transmit information for continuously executing an application corresponding to the screen 1113 to the external electronic device 120, based on unfolding of the external electronic device 120. A state 1104 of the external electronic device 120 of FIG. 11A may be an exemplary state of the external electronic device 120 that receives the information for executing the application. When the application included in the information is installed in the external electronic device 120, the external electronic device 120 may access a channel (e.g., a channel created for video conference) corresponding to the screen 1113 by executing the application. In the state 1104 in which the application included in the information is not installed in the external electronic device 120, the external electronic device 120 may display a screen for installing the application. In the state 1104, the external electronic device 120 may execute another application (e.g., a market application) capable of downloading the application included in the information. Based on completion of installation of the application, the external electronic device 120 may continuously display the screen 1113.

According to an embodiment, when an application for voice call and/or video call is continuously executed, the wearable device 101 may perform call forwarding based on unfolding of the external electronic device 120. Based on the call forwarding, the wearable device 101 may transmit information on a first call connection including the wearable device 101 to the unfolded external electronic device 120. By using the information, the external electronic device 120 may execute the application to join the first call connection, or establish a second call connection related to the first call connection. By using the second call connection, the external electronic device 120 may support the user of the wearable device 101 to continuously perform voice call and/or video call by using the external electronic device 120.

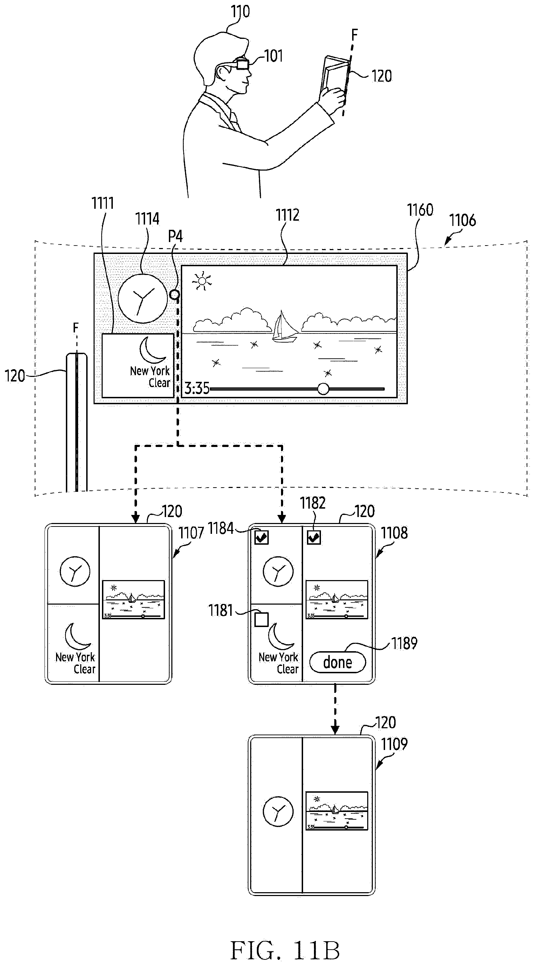

As in the exemplary state 1101 of FIG. 11A, the wearable device 101 may selectively move a specific screen to the external electronic device 120 by using a gaze of the user 110 facing different screens 1111, 1112, and 1113. The embodiment is not limited thereto, and the wearable device 101 may move a group of screens 1111, 1112, and 1113 to the external electronic device 120. Referring to FIG. 11B, an exemplary state 1106 in which the wearable device 101 displays a plurality of screens 1111, 1112, and 1114 on FoV of the user 110 is illustrated. The wearable device 101 may display a widget-type screen 1114 having a watch form based on execution of an application for displaying time. In the state 1106, the wearable device 101 may receive an input for grouping the screens 1111, 1112, and 1114. The input may include a gesture of connecting, dragging, and/or merging the screens 1111, 1112, and 1114. In response to the input, the wearable device 101 may display a visual object 1160 indicating a group of screens 1111, 1112, and 1114. The visual object 1160 may be referred to as a wall in terms of having a form of a plane in which the screens 1111, 1112, and 1114 are arranged. Although the visual object 1160 having a rectangular plane form is exemplary illustrated, the embodiment is not limited thereto.

Referring to FIG. 11B, in the state 1106 displaying the visual object 1160, the wearable device 101 that identifies a gaze facing a point P4 within the visual object 1160 may transmit information on the screens 1111, 1112, and 1114 grouped by the visual object 1160 to the external electronic device 120, based on unfolding of the external electronic device 120. The information may include data on a location, arrangement, and/or layout of the screens 1111, 1112, and 1114 within the visual object 1160. The external electronic device 120 receiving the information may determine whether to display each of the screens 1111, 1112, and 1114 on the display, based on a threshold of the screens capable of displaying simultaneously on a display of the external electronic device 120. In a state 1107 in which the threshold is 3 or more, the external electronic device 120 receiving information on the three screens 1111, 1112, and 1114 may execute applications corresponding to each of the screens 1111, 1112, and 1114. Based on execution of the applications, the external electronic device 120 may display screens provided from the executed applications, similar to layout of the screens 1111, 1112, and 1114.

Referring to FIG. 11B, in a state 1108 in which the threshold value is less than 3, the external electronic device 120 receiving information on the three screens 1111, 1112, and 1114 may display UI for identifying whether to display each of the screens 1111, 1112, and 1114. In the state 1108 of FIG. 11B, the external electronic device 120 may display visual objects 1181, 1182, and 1184 corresponding to each of the screens 1111, 1112, and 1114. Visual objects 1181, 1182, and 1184 having a check box form are illustrated, but the embodiment is not limited thereto. In order to receive an input for completing selection of the screens 1111, 1112, and 1114, the external electronic device 120 may display a visual object 1189 having a button form.

Referring to FIG. 11B, in the state 1108 in which the visual objects 1182 and 1184 are selected, the external electronic device 120 may switch to a state 1109 in response to an input of selecting the visual object 1189. In the state 1109, the external electronic device 120 may selectively execute applications selected by the visual objects 1182 and 1184 among applications corresponding to the screens 1111, 1112, and 1114. Referring to FIG. 11B, the external electronic device 120 may display media content included in the screen 1112 based on the visual object 1182, and may display a widget in a watch form corresponding to the screen 1114 by using the visual object 1184.

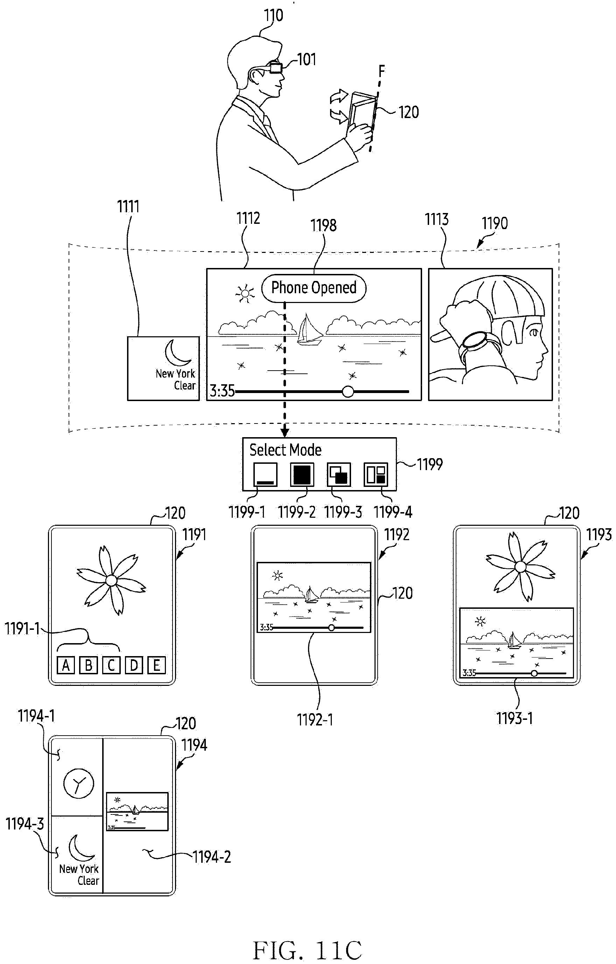

Referring to FIG. 11C, according to an embodiment, in a state 1190 displaying a plurality of screens 1111, 1112, and 1113, based on unfolding of the external electronic device 120, the wearable device 101 may display a visual object 1198 related to the unfolding. In the exemplary state 1190 of FIG. 11C, the wearable device 101 may display a visual object 1198 having a pop-up window form including preset text (e.g., "phone opened") representing unfolding of the external electronic device 120. The embodiment is not limited thereto.

According to an embodiment, in the state 1190 identifying that unfolding of the external electronic device 120, the wearable device 101 may display a visual object 1199 including different options related to at least one screen to be moved to the external electronic device 120 among the screens 1111, 1112, and 1113. The options may be classified by a layout of at least one screen to be moved from the wearable device 101 to the external electronic device 120. According to an embodiment, the wearable device 101 may obtain information on frequency in which each of the screens 1111, 1112, and 1113 is focused by the user 110, based on a motion (e.g., gaze and/or hand gesture of the user 110) of the user 110 wearing the wearable device 101. By using the information, the wearable device 101 may transmit a signal for displaying at least one of the screens 1111, 1112, and 1113, to the external electronic device 120.

Referring to FIG. 11C, according to an embodiment, buttons 1199-1, 1199-2, 1199-3, and 1199-4 corresponding to each of options provided by the wearable device 101 to the user 110 through the visual object 1199 are illustrated. In response to an input indicating to select button 1199-1, the wearable device 101 may transmit a signal for displaying icons 1191-1 indicating each of the screens 1111, 1112, and 1113 displayed by the wearable device 101 to the external electronic device 120. Based on the signal transmitted by an input indicating to select the button 1199-1, the external electronic device 120 may switch to a state 1191. In the state 1191, the external electronic device 120 may display icons 1191-1 indicating applications corresponding to each of the screens 1111, 1112, and 1113 on a lower end (e.g., app tray) of a display.

Referring to FIG. 11C, in response to an input indicating to select the button 1199-2 in the visual object 1199, the wearable device 101 may transmit a signal to display a specific screen selected by information on the frequency of focusing by the user 110 in full screen, to the external electronic device 120. The external electronic device 120 receiving the signal may display a screen 1192-1 corresponding to the signal, by switching to a state 1192. For example, the wearable device 101 may transmit a signal for displaying the screen 1112 mostly focused by the user 110, from among the screens 1111, 1112, and 1113 by using the information. In the state 1192 receiving the signal, the external electronic device 120 may display the screen 1192-1 on the entire displaying region of a display, by executing an application corresponding to the screen 1112.

Referring to FIG. 11C, in response to an input indicating to select a button 1199-3 in the visual object 1199, the wearable device 101 may transmit a signal to display a specific screen selected by information on the frequency of focusing by the user 110 as a pop-up window on a display of the external electronic device 120, to the external electronic device 120. For example, the wearable device 101 may transmit a signal for displaying the screen 1112 mostly focused by the user 110, from among the screens 1111, 1112, and 1113, by using the information. Based on receiving the signal, the external electronic device 120 may switch to a state 1193. In the state 1193, the external electronic device 120 may display a pop-up window 1193-1 by overlapping on a screen displayed through a display, by executing an application corresponding to the screen 1112.

Referring to FIG. 11C, in response to an input indicating to select a button 1199-4 in the visual object 1199, the wearable device 101 may transmit a signal for parallelly displaying the screens 1111, 1112, and 1113 displayed through the wearable device 101 to the external electronic device 120. The signal may include a layout of the screens 1111, 1112, and 1113 arranged by information on the frequency of focusing by the user 110. The layout may be set so that a sizes of the screens 1111, 1112, and 1113 increase in ascending order of the frequency in which the screens 1111, 1112, and 1113 are focused. Based on receiving the signal, the external electronic device 120 may switch to a state 1194. In the state 1194, the external electronic device 120 may display screens 1194-1, 1194-2, and 1194-3 having a layout corresponding to the signal on a display of the external electronic device 120, based on the signal, by executing applications corresponding to each of the screens 1111, 1112, and 1113. The external electronic device 120 may create screens 1194-1, 1194-2, and 1194-3 for continuously displaying each of the screens 1111, 1112, and 1113 displayed through the wearable device 101 based on the signal.

In the state 1190 of FIG. 11C, the wearable device 101 may display the visual object 1199 during a time interval of a preset length. In the time interval displaying the visual object 1199, in response to an input indicating to select at least one of the buttons 1199-1, 1199-2, 1199-3, and 1199-4 in the visual object 1199, the wearable device 101 may execute a function for moving at least one of the screens 1111, 1112, and 1113 to the external electronic device 120. When any input related to the visual object 1199 is not identified during the time interval, the wearable device 101 may refrain from executing the function.

As described above, according to an embodiment, the wearable device 101 may execute one or more applications installed in the external electronic device 120, by using a form of the external electronic device 120 and a direction of the gaze of the user 110 wearing the wearable device 101. Based on execution of one or more of the applications, the wearable device 101 may move one or more screens (e.g., screens 1111, 1112, 1113, and 1114) floating on FoV of the user 110 to the display of the external electronic device 120.

An operation of the wearable device 101 performing a form of the external electronic device 120 based on whether it is a fully unfolded form (e.g., a form in which an angle of folding axis F of the external electronic device 120 is 180 °) is described, but the embodiment is not limited thereto. For example, in another form distinguished from the fully unfolded form, such as the right angle form in Table 1, the wearable device 101 may control movement of the screen between the wearable device 101 and the external electronic device 120.

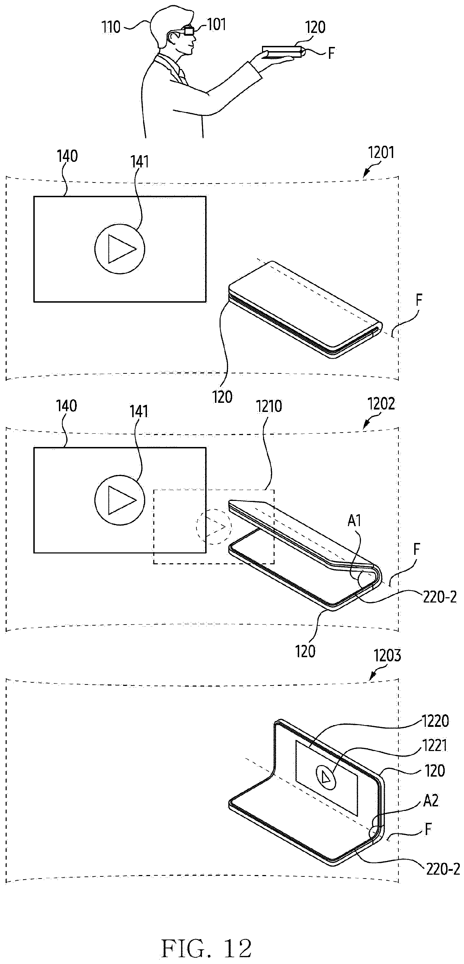

Hereinafter, according to an embodiment, an example of an operation performed by the wearable device 101 based on identifying the right angle form of the external electronic device 120 will be described with reference to FIG. 12.

FIG. 12 illustrates an example of an operation performed by a wearable device 101 by using a direction of an external electronic device 120, according to an embodiment. The wearable device 101 and the external electronic device 120 of FIGS. 1 to 2 may include the wearable device 101 and the external electronic device 120 of FIG. 12. An operation of the wearable device 101 described with reference to FIG. 12 may be related to at least one of the operations (e.g., the operation 340 of FIG. 3) of FIG. 3.

Referring to FIG. 12, according to an embodiment, states 1201, 1202, and 1203 into which the wearable device 101 enters, according to a form of the external electronic device 120 foldable by a straight folding axis F are illustrated. In an exemplary case of FIG. 12, the user 110 may lay down the external electronic device 120 or may arrange one surface of the external electronic device 120 toward the ground or a direction of gravity acceleration. For example, the folding axis F of the external electronic device 120 may be substantially perpendicular to the ground or the direction of gravity acceleration.

In the state 1201 identifying the fully folded external electronic device 120, the wearable device 101 may display a screen 140 on a displaying region formed by a display (e.g., the display 220-1 of FIG. 2). In the state 1201 in which the screen 140 for reproducing media content is displayed, the wearable device 101 may monitor a form of the external electronic device 120. The wearable device 101 that identifies folding of the external electronic device 120 may switch from the state 1201 to the state 1202. In the state 1202, the wearable device 101 may display a visual object 1210 for guiding or informing of movement of the screen 140 based on an angle A1 of folding axis F of the external electronic device 120. Similar to the visual object 410 of FIG. 4, the visual object 1210 of FIG. 12 may be moved, enlarged, and/or reduced according to the angle A1 of the folding axis F. In an embodiment, the wearable device 101 may display the visual object 1210, based on a gaze (e.g., a direction of a gaze facing the screen 140) of the user 110 wearing the wearable device 101, described above with reference to FIGS. 4 to 7B. In an embodiment, the wearable device 101 may display the visual object 1210 based on a position of the external electronic device 120 in FoV of the user 110, described with reference to FIGS. 8A to 10B.

In an embodiment, as in an exemplary case of FIG. 12, when one surface of the external electronic device 120 is disposed toward a direction of gravity acceleration or the ground, the external electronic device 120 may be moved in an angle range (e.g., an angle range of 80 ° or more and 110 ° or less, in Table 1) including an angle A1 of folding axis f that is in the right angle. When the angle A1 is included in the angle range including the right angle, the external electronic device 120 may display UI suitable for a form of the display 220-2 classified by the folding axis F. According to an embodiment, the wearable device 101 may transmit information for displaying the screen 140 to the external electronic device 120, based on whether the angle A1 of folding axis F is included in the angle range in the state 1202.

In the state 1202, the wearable device 101 identifying the angle A1 included in the angle range corresponding to the right angle form of Table 1 may enter the state 1203. For example, in the state 1203, an angle A2 of folding axis F of the external electronic device 120 may be substantially 90 °. The wearable device 101 may transmit information for continuously displaying the screen 140 to the external electronic device 120, in response to identifying the angle A2 included in the angle range including 90 °. In the state 1203 of FIG. 12, on the display 220-2 folded at a right angle by folding axis F, the external electronic device 120 may display a screen 1220 corresponding to the screen 140 on one surface that was positioned facing a direction of gravity acceleration or the ground and has been unfolded by the angle A2, in response to the information transmitted from the wearable device 101. For example, the external electronic device 120 may display media content included in the screen 140 through the screen 1220. Referring to FIG. 12, similar to a play button 141 included in the screen 140, the external electronic device 120 may display a play button 1221 for controlling reproduction of the media content on the screen 1220.

Although an operation of the wearable device 101 is described based on the screen 140, the embodiment is not limited thereto. For example, in the state 1203, when the wearable device 101 moves a group of a plurality of screens to the external electronic device 120 as in the visual object 1160 of FIG. 11B, the external electronic device 120 may display at least one of the plurality of screens, based on a form of the display 220-2 folded at a right angle by the folding axis F. In the example, a layout of the plurality of screens displayed through the display 220-2 of the external electronic device 120 may be different from a layout of a plurality of screens displayed by the wearable device 101.

An operation of the wearable device 101 is described based on sequential movement of the states 1201, 1202, and 1203, but the embodiment is not limited thereto. For example, in the state 1203 in which the external electronic device 120 has a right angle form, when the user 110 folds the external electronic device 120, the wearable device 101 may execute a function for moving the screen 1220 of the display 220-2 to the wearable device 101. The function may include a function of displaying a visual object (e.g., the visual object 510 of FIG. 5 and/or the visual object 840 of FIG. 8B) for guiding or informing of movement of the screen 1220 similar as described above with reference to FIGS. 5 and/or 8B.

As described above, according to an embodiment, the wearable device 101 may control movement of the screen 140 between the wearable device 101 and the external electronic device 120, by using a form and/or direction of the external electronic device 120 having a straight folding axis F. The embodiment is not limited thereto. Hereinafter, an exemplary operation in which the wearable device 101 controls movement of the screen 140 will be described based on transformation of an external electronic device including a rollable display.

FIG. 13 illustrates an example of an operation performed by a wearable device 101 based on a form of an external electronic device 120, according to an embodiment. The wearable device 101 of FIGS. 1 to 2 may include the wearable device 101 of FIG. 13. An operation of the wearable device 101 described with reference to FIG. 13 may be related to at least one (e.g., operation 320 of FIG. 3) of operations of FIG. 13.

Referring to FIG. 13, according to an embodiment, an exemplary state 1301 in which the wearable device 101 is connected to an external electronic device 120-3 is illustrated. The external electronic device 120-3 of FIG. 13 may include the external electronic device 120-3 of FIG. 2. According to an embodiment, the wearable device 101 may identify an external electronic device 120-3 including a display 220- insertable into a housing by using an image of a camera (e.g., the camera 225 of FIG. 2). According to an embodiment, the wearable device 101 may identify the external electronic device 120-3 through a communication link established between the external electronic device 120 and the wearable device 101 by a communication circuit (e.g., the communication circuit 240-1 of FIG. 2).

Referring to FIG. 13, according to an embodiment, a form of the external electronic device 120-3 connected to the wearable device 101 may be classified by a size of the display 220-2 inserted into a housing of the external electronic device 120-3. For example, as the display 220-2 is inserted into the housing, a form, and/or a state of the external electronic device 120-3 in which a size of an externally exposed display 220-2 is minimized may be referred to as a rolled form (or a rolled state, fully rolled state). For example, as the display 220-2 is extracted from the housing, a form, and/or a state of the external electronic device 120-3 in which a size of an externally exposed display 220-2 is maximized may be referred to as an unrolled form (or an unrolled state, fully unrolled state). A form, and/or a state of the external electronic device 120-3 may include an intermediate form (or an intermediate state, partially rolled state, partially unrolled state) between the rolled form and the unrolled form.

Referring to FIG. 13, in a state 1301 of identifying the external electronic device 120-3 in the rolled form, the wearable device 101 may display one or more screens 1111, 1112, and 1114 on a displaying region formed by a display (e.g., the display 220-1 of FIG. 2). Referring to FIG. 13, as in the state 1106 of FIG. 11B, an exemplary state 1301 in which the wearable device 101 groups the screens 1111, 1112, and 1114 by using the visual object 1160 is illustrated. In the state 1301, the wearable device 101 may identify deformation of the external electronic device 120-3 by using a camera and/or a communication circuit. The external electronic device 120-3 may be transformed into another form (e.g., unfolded form) different from the rolled form, in response to an Input (e.g., input of pressing a button of the external electronic device 120-3) indicating external force (e.g., external force applied to the external electronic device 120-3 by the user 110) and/or deformation. Deformation of the external electronic device 120-3 may be performed by an actuator included in the external electronic device 120-3.

In the state 1301 of FIG. 13, the wearable device 101 that identifies deformation of the external electronic device 120-3 may enter a transition mode. For example, the wearable device 101 may enter the transition mode, based on a size of the display 220-2 extracted from a housing of the external electronic device 120-3. For example, the wearable device 101 that identifies the display 220-2 extracted by exceeding the preset size may enter the transition mode. In the transition mode, the wearable device 101 may display a visual object (e.g., the visual object 410 of FIG. 4) for guiding or informing of movement of at least one screen.

Referring to FIG. 13, in the transition mode, the wearable device 101 may select at least one screen to be moved to the external electronic device 120-3 by using a direction of a gaze of the user 110. For example, the wearable device 101 that identifies a gaze facing a point P1 in the screen 1111 may transmit information for moving the screen 1111 to the external electronic device 120-3, in response to extraction of the display 220-2 of the external electronic device 120-3. The state 1302 of the external electronic device 120-3 of FIG. 13 may be an exemplary state of the external electronic device 120-3 that receives information for moving the screen 1111. As the external electronic device 120-3 is transformed into unfolded form, the external electronic device 120-3 may execute an application corresponding to the screen 1111 by using the information and display a screen provided from the application on the display 220-2. As described above with reference to FIG. 11A, the external electronic device 120-3 may release a lock mode by displaying a screen related to the lock mode or using a user account logged in to the wearable device 101.

Referring to FIG. 13, the wearable device 101 that identifies a gaze facing a point P2 in the visual object 1160 may transmit information on the screens 1111, 1112, and 1114 grouped by the visual object 1160 to the external electronic device 120-3. The information may include data on one or more applications that provide each of the screens 1111, 1112, and 1114, and/or a layout of the screens 1111, 1112, and 1114. The external electronic device 120-3 receiving the information may display at least one of the screens 1111, 1112, and 1114, based on a threshold of screens capable of being displayed simultaneously on the display 220-2. When the wearable device 101 transmits information on the three screens 1111, 1112, and 1114, and the threshold is less than 3, the external electronic device 120-3 may display UI for selection of the screens 1111, 1112, and 1114, as in the state 1303. Referring to FIG. 13, in the state 1303, the external electronic device 120-3 may display visual objects 1321, 1322, and 1323 corresponding to each of the screens 1111, 1112, and 1114. Visual objects 1321, 1322, and 1323 having a check box form are illustrated, but embodiments are not limited thereto. In order to receive an input for completing selection of the screens 1111, 1112, and 1114, the external electronic device 120-3 may display a visual object 1329 having a button form.

Referring to FIG. 13, in the state 1303 in which the visual objects 1321 and 1322 are selected, the external electronic device 120-3 may switch to the state 1304, in response to an input with respect to the visual object 1329. In the state 1304, the external electronic device 120-3 may execute one or more applications corresponding to the screens 1112 and 1114 selected by the visual objects 1321 and 1322. For example, the external electronic device 120-3 may display media content included in the screen 1112 on the display 220-2, and display a watch form widget corresponding to the screen 1114.

Although an operation of the wearable device 101 based on a direction of a gaze facing any one of the points P1 and P2 is described, the embodiment is not limited thereto. For example, as described above with reference to FIG. 8A, the wearable device 101 may select one or more screens to be moved from the wearable device 101 to the external electronic device 120-3, based on the external electronic device 120-3 at least partially overlapping with any one of the screens 1111, 1112, and 1114, and/or the visual object 1160.

An operation of the wearable device 101 is described based on an exemplary case in which the display 220-2 of the external electronic device 120-3 is extracted, but the embodiment is not limited thereto. For example, in response to identifying that the external electronic device 120-3 of the state 1304 is transformed into a rolled form based on insertion of the display 220-2, the wearable device 101 may execute a function for displaying at least one screen displayed on the display 220-2 of the external electronic device 120-3 by using a display of the wearable device 101. As described above with reference to FIG. 5, the function may be executed according to a direction of a gaze of the user 110. The embodiment is not limited thereto, and the function may be executed based on a location of the external electronic device 120-3 within FoV of the user 110, as described above with reference to FIG. 8B.

As described above, according to an embodiment, the wearable device 101 may control movement of a screen between the wearable device 101 and the external electronic device 120, based on deformation of foldable or rollable external electronic device 120. When a size of a display (e.g., the display 220-2 of FIG. 2) of the external electronic device 120 viewed by the user 110 increases based on the transformation, the wearable device 101 may move information displayed through a display (e.g., the display 220-1 of FIG. 2) of the wearable device 101 to the display with an increased size. When a size of the display of the external electronic device 120 viewed by the user 110 is reduced, the wearable device 101 may move information displayed through the display of the external electronic device 120 to the display of the wearable device 101. Based on movement of information described above, the wearable device 101 may support seamless movement between the wearable device 101 and the external electronic device 120.

Hereinafter, according to an embodiment, an example of a form factor of the wearable device 101 will be described by using FIGS. 14A to 14B and/or 15A to 15B.

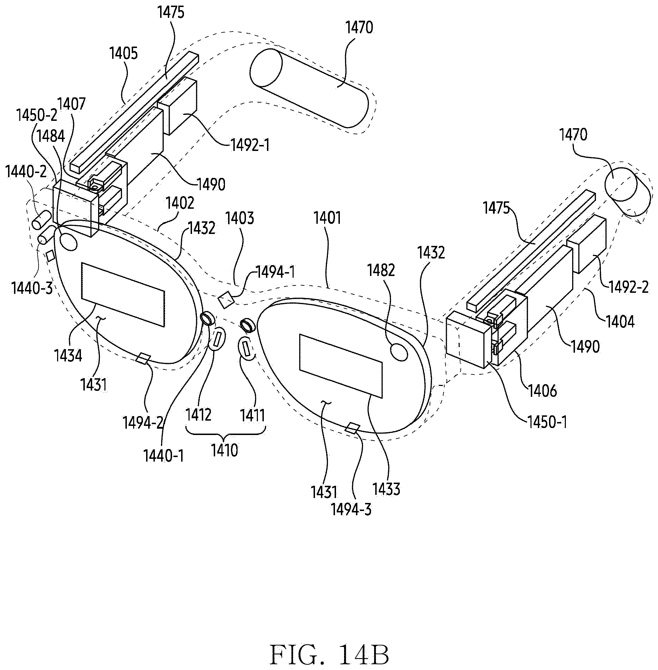

FIG. 14A illustrates an example of a perspective view of a wearable device, according to an embodiment. FIG. 14B illustrates an example of one or more hardware disposed in a wearable device, according to an embodiment. The wearable device 101 of FIGS. 1 to 2 may include a wearable device 1400 of FIGS. 14A to 14B. As shown in FIG. 14A, according to an embodiment, the wearable device 1400 may include at least one display 1450 and a frame supporting the at least one display 1450.

According to an embodiment, the wearable device 1400 may be wearable on a part of the user's body. The wearable device 1400 may provide augmented reality (AR), virtual reality (VR), or mixed reality (MR) combining the augmented reality and the virtual reality to a user wearing the wearable device 1400. For example, the wearable device 1400 may output a virtual reality image to a user through the at least one display 1450 in response to a user's preset gesture obtained through a motion recognition camera 1440-2 of FIG. 14B.

According to an embodiment, the at least one display 1450 in the wearable device 1400 may provide visual information to a user. The at least one display 1450 may include the display 220-1 of FIG. 2. For example, the at least one display 1450 may include a transparent or translucent lens. The at least one display 1450 may include a first display 1450-1 and/or a second display 1450-2 spaced apart from the first display 1450-1. For example, the first display 1450-1 and the second display 1450-2 may be disposed at positions corresponding to the user's left and right eyes, respectively.

Referring to FIG. 14B, the at least one display 1450 may provide another visual information, which is distinct from the visual information, together with the visual information included in the ambient light passing through the lens, a user wearing the wearable device 1400, by forming a displaying region on the lens. The lens may be formed based on at least one of a fresnel lens, a pancake lens, or a multi-channel lens. For example, the displaying region formed by the at least one display 1450 may be formed on the second surface 1432 among the first surface 1431 and the second surface 1432 of the lens. When the user wears the wearable device 1400, the ambient light may be transmitted to the user by being incident on the first surface 1431 and being penetrated through the second surface 1432. For another example, the at least one display 1450 may display the virtual reality image to be combined with a real screen transmitted through the ambient light. The virtual reality image outputted from the at least one display 1450 may be transmitted to the user's eyes through the one or more hardware (e.g., optical devices 1482 and 1484, and/or at least one waveguides 1433 and 1434)) included in the wearable device 1400.

According to an embodiment, the wearable device 1400 may include the waveguides 1433 and 1434 that diffracts light transmitted from the at least one display 1450 and relayed by the optical devices 1482 and 1484 and transmits it to the user. The waveguides 1433 and 1434 may be formed based on at least one of glass, plastic, or polymer. A nano pattern may be formed on at least a portion of the outside or inside of the waveguides 1433 and 1434. The nano pattern may be formed based on a grating structure having a polygonal or curved shape. Light incident to one end of the waveguides 1433 and 1434 may be propagated to the other end of the waveguides 1433 and 1434 by the nano pattern. The waveguides 1433 and 1434 may include at least one of at least one diffraction element (e.g., a diffractive optical element (DOE), a holographic optical element (HOE)), and a reflection element (e.g., a reflection mirror). For example, the waveguides 1433 and 1434 may be disposed in the wearable device 1400 to guide a screen displayed by the at least one display 1450 to the user's eyes. For example, the screen may be transmitted to the user's eyes through total internal reflection (TIR) generated in the waveguides 1433 and 1434.

According to an embodiment, the wearable device 1400 may analyze an object included in a real image collected through a photographing camera 1440-1, combine virtual object corresponding to an object that become a subject of augmented reality provision among the analyzed object, and display them on the at least one display 1450. The virtual object may include at least one of text and images for various information associated with the object included in the real image. The wearable device 1400 may analyze the object by using a multi-camera such as a stereo camera. For the object analysis, the wearable device 1400 may execute time-of-flight (ToF) and/or simultaneous localization and mapping (SLAM) supported by the multi-camera. The user wearing the wearable device 1400 may watch an image displayed on the at least one display 1450.

According to an embodiment, the frame may be configured with a physical structure in which the wearable device 1400 may be worn on the user's body. According to an embodiment, the frame may be configured so that when the user wears the wearable device 1400, the first display 1450-1 and the second display 1450-2 may be positioned corresponding to the user's left and right eyes. The frame may support the at least one display 1450. For example, the frame may support the first display 1450-1 and the second display 1450-2 to be positioned at positions corresponding to the user's left and right eyes.

Referring to FIG. 14A, according to an embodiment, the frame may include a region 1420 at least partially in contact with the portion of the user's body in case that the user wears the wearable device 1400. For example, the region1420 in contact with the portion of the user's body of the frame may include a region contacting a portion of the user's nose, a portion of the user's ear, and a portion of the side of the user's face that the wearable device 1400 contacts. According to an embodiment, the frame may include a nose pad 1410 that is contacted on the portion of the user's body. When the wearable device 1400 is worn by the user, the nose pad 1410 may be contacted on the portion of the user's nose. The frame may include a first temple 1404 and a second temple 1405 that is contacted on another portion of the user's body that is distinct from the portion of the user's body.

For example, the frame may include a first rim 1401 surrounding at least a portion of the first display 1450-1, a second rim 1402 surrounding at least a portion of the second display 1450-2, a bridge 1403 disposed between the first rim 1401 and the second rim 1402, a first pad 1411 disposed along a portion of the edge of the first rim 1401 from one end of the bridge 1403, a second pad 1412 disposed along a portion of the edge of the second rim 1402 from the other end of the bridge 1403, the first temple 1404 extending from the first rim 1401 and fixed to a portion of the wearer's ear, and the second temple 1405 extending from the second rim 1402 and fixed to a portion of the ear opposite to the ear. The first pad 1411 and the second pad 1412 may be in contact with the portion of the user's nose, and the first temple 1404 and the second temple 1405 may be in contact with a portion of the user's face and the portion of the user's ear. The temples 1404 and 1405 may be rotatably connected to the rim through hinge units 1406 and 1407 of FIG. 14B. The first temple 1404 may be rotatably connected with respect to the first rim 1401 through the first hinge unit 1406 disposed between the first rim 1401 and the first temple 1404. The second temple 1405 may be rotatably connected with respect to the second rim 1402 through the second hinge unit 1407 disposed between the second rim 1402 and the second temple 1405. According to an embodiment, the wearable device 1400 may identify an external object (e.g., a user's fingertip) touching the frame and/or a gesture performed by the external object by using a touch sensor, a grip sensor, and/or a proximity sensor formed on at least a portion of the surface of the frame.

According to an embodiment, the wearable device 1400 may include hardware (e.g., hardware described above based on the block diagram of FIG. 2) that performs various functions. For example, the hardware may include a battery module 1470, an antenna module 1475, the optical devices 1482 and 1484, speakers 1492-1 and 1492-2, microphones 1494-1, 1494-2, and 1494-3, a light emitting module (not illustrated), and/or a printed circuit board 1490. Various hardware may be disposed in the frame.

According to an embodiment, the microphone 1494-1, 1494-2, and 1494-3 of the wearable device 1400 may obtain a sound signal, by being disposed on at least a portion of the frame. The first microphone 1494-1 disposed on the nose pad 1410, the second microphone 1494-2 disposed on the second rim 1402, and the third microphone 1494-3 disposed on the first rim 1401 are illustrated in FIG. 14B, but the number and disposition of the microphone 1494 are not limited to an embodiment of FIG. 14B. In case that the number of the microphone 1494 included in the wearable device 1400 is two or more, the wearable device 1400 may identify the direction of the sound signal by using a plurality of microphones disposed on different portions of the frame.

According to an embodiment, the optical devices 1482 and 1484 may transmit the virtual object transmitted from the at least one display 1450 to the waveguides 1433 and 1434. For example, the optical devices 1482 and 1484 may be a projector. The optical devices 1482 and 1484 may be disposed adjacent to the at least one display 1450 or may be included in the at least one display 1450 as portion of the at least one display 1450. The first optical device 1482 may correspond to the first display 1450-1, and the second optical device 1484 may correspond to the second display 1450-2. The first optical device 1482 may transmit the light outputted from the first display 1450-1 to the first waveguide 1433, and the second optical device 1484 may transmit light outputted from the second display 1450-2 to the second waveguide 1434.

In an embodiment, a camera 1440 may include an eye tracking camera (ET CAM) 1440-1, the motion recognition camera 1440-2, and/or the photographing camera 1440-3. The photographing camera 1440-3, the eye tracking camera 1440-1, and the motion recognition camera 1440-2 may be disposed at different positions on the frame and may perform different functions. The photographing camera 1440-3, the eye tracking camera 1440-1, and the motion recognition camera 1440-2 may be an example of the camera 225 of FIG. 2. The eye tracking camera 1440-1 may output data indicating the gaze of the user wearing the wearable device 1400. For example, the wearable device 1400 may detect the gaze from an image including the user's pupil obtained through the eye tracking camera 1440-1. An example in which the eye tracking camera 1440-1 is disposed toward the user's right eye is illustrated in FIG. 14B, but the embodiment is not limited thereto, and the eye tracking camera 1440-1 may be disposed alone toward the user's left eye or may be disposed toward two eyes.

In an embodiment, the photographing camera 1440-3 may photograph a real image or background to be matched with a virtual image in order to implement the augmented reality or mixed reality content. The photographing camera may photograph an image of a specific object existing at a position viewed by the user and may provide the image to the at least one display 1450. The at least one display 1450 may display one image in which a virtual image provided through the optical devices 1482 and 1484 is overlapped with information on the real image or background including an image of the specific object obtained by using the photographing camera. In an embodiment, the photographing camera may be disposed on the bridge 1403 disposed between the first rim 1401 and the second rim 1402.

In an embodiment, the eye tracking camera 1440-1 may implement a more realistic augmented reality by matching the user's gaze with the visual information provided on the at least one display 1450 by tracking the gaze of the user wearing the wearable device 1400. For example, when the user looks at the front, the wearable device 1400 may naturally display environment information associated with the user's front on the at least one display 1450 at the position where the user is positioned. The eye tracking camera 1440-1 may be configured to capture an image of the user's pupil in order to determine the user's gaze. For example, the eye tracking camera 1440-1 may receive gaze detection light reflected from the user's pupil and may track the user's gaze by using the position and movement of the received gaze detection light. In an embodiment, the eye tracking camera 1440-1 may be disposed at a position corresponding to the user's left and right eyes. For example, the eye tracking camera 1440-1 may be disposed in the first rim 1401 and/or the second rim 1402 to face the direction in which the user wearing the wearable device 1400 is positioned.

In an embodiment, the motion recognition camera 1440-2 may provide a specific event to the screen provided on the at least one display 1450 by recognizing the movement of the whole or portion of the user's body, such as the user's torso, hand, or face. The motion recognition camera 1440-2 may obtain a signal corresponding to the gesture by recognizing the user's gesture, and may provide a display corresponding to the signal to the at least one display 1450. The processor may identify a signal corresponding to the operation and may perform a preset function based on the identification. In an embodiment, the motion recognition camera 1440-2 may be disposed on the first rim 1401 and/or the second rim 1402.

In an embodiment, the camera 1440 included in the wearable device 1400 is not limited to the above-described eye tracking camera 1440-1 and the motion recognition camera 1440-2. For example, the wearable device 1400 may identify an external object included in the FoV by using the photographing camera 1440-3 disposed toward the user's FoV. That the wearable device 1400 identifies the external object may be performed by using a sensor for identifying a distance between the wearable device 1400 and the external object, such as a depth sensor and/or a time of flight (ToF) sensor. The camera 1440 disposed toward the FoV may support an autofocus function and/or an optical image stabilization (OIS) function. For example, the wearable device 1400 may include the camera 1440 (e.g., a face tracking (FT) camera) disposed toward the face in order to obtain an image including the face of the user wearing the wearable device 1400.

Although not illustrated, the wearable device 1400 according to an embodiment may further include a light source (e.g., LED) that emits light toward a subject (e.g., user's eyes, face, and/or an external object in the FoV) photographed by using the camera 1440. The light source may include an LED having an infrared wavelength. The light source may be disposed on at least one of the frame, and the hinge units 1406 and 1407.

According to an embodiment, the battery module 1470 may supply power to electronic components of the wearable device 1400. In an embodiment, the battery module 1470 may be disposed in the first temple 1404 and/or the second temple 1405. For example, the battery module 1470 may be a plurality of battery modules 1470. The plurality of battery modules 1470, respectively, may be disposed on each of the first temple 1404 and the second temple 1405. In an embodiment, the battery module 1470 may be disposed at an end of the first temple 1404 and/or the second temple 1405.

In an embodiment, the antenna module 1475 may transmit the signal or power to the outside of the wearable device 1400 or may receive the signal or power from the outside. The antenna module 1475 may be electronically and/or operably connected to a communication circuit (e.g., the communication circuit 240-1 of FIG. 2) of the wearable device 1400. In an embodiment, the antenna module 1475 may be disposed in the first temple 1404 and/or the second temple 1405. For example, the antenna module 1475 may be disposed close to one surface of the first temple 1404 and/or the second temple 1405.

In an embodiment, the speakers 1492-1 and 1492-2 may output a sound signal to the outside of the wearable device 1400. A sound output module may be referred to as a speaker. In an embodiment, the speakers 1492-1 and 1492-2 may be disposed in the first temple 1404 and/or the second temple 1405 in order to be disposed adjacent to the ear of the user wearing the wearable device 1400. For example, the wearable device 1400 may include the second speaker 1492-2 disposed adjacent to the user's left ear by being disposed in the first temple 1404, and the first speaker 1492-1 disposed adjacent to the user's right ear by being disposed in the second temple 1405.

In an embodiment, the light emitting module (not illustrated) may include at least one light emitting element. The light emitting module may emit light of a color corresponding to a specific state or may emit light through an operation corresponding to the specific state in order to visually provide information on a specific state of the wearable device 1400 to the user. For example, in case that the wearable device 1400 needs charging, it may repeatedly emit red light at a preset timing. In an embodiment, the light emitting module may be disposed on the first rim 1401 and/or the second rim 1402.

Referring to FIG. 14B, according to an embodiment, the wearable device 1400 may include the printed circuit board (PCB) 1490. The PCB 1490 may be included in at least one of the first temple 1404 or the second temple 1405. The PCB 1490 may include an interposer disposed between at least two sub PCBs. On the PCB 1490, one or more hardware (e.g., hardware illustrated by the blocks described above with reference to FIG. 2) included in the wearable device 1400 may be disposed. The wearable device 1400 may include a flexible PCB (FPCB) for interconnecting the hardware.

According to an embodiment, the wearable device 1400 may include at least one of a gyro sensor, a gravity sensor, and/or an acceleration sensor for detecting the posture of the wearable device 1400 and/or the posture of a body part (e.g., a head) of the user wearing the wearable device 1400. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 1400 may identify the user's motion and/or gesture performed to execute or stop a specific function of the wearable device 1400 by using the IMU.

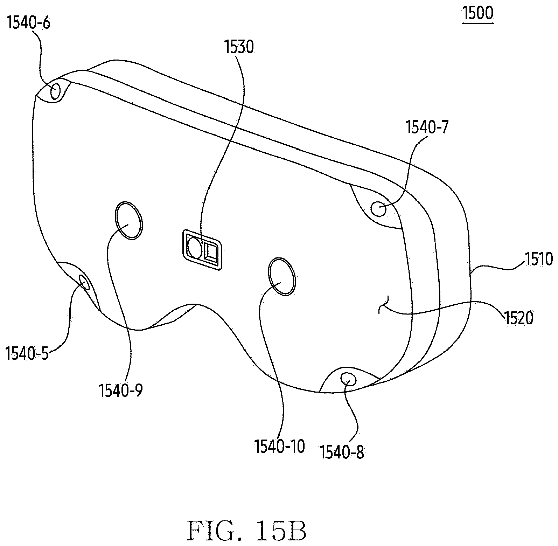

FIGS. 15A to 15B illustrate an example of an exterior of a wearable device 1500, according to an embodiment. The wearable device 101 of FIGS. 1 to 2 may include the wearable device 1500 of FIGS. 15A to 15B. According to an embodiment, an example of an exterior of a first surface 1510 of a housing of the wearable device 1500 may be illustrated in FIG. 15A, and an example of an exterior of a second surface 1520 opposite to the first surface 1510 may be illustrated in FIG. 15B.

Referring to FIG. 15A, according to an embodiment, the first surface 1510 of the wearable device 1500 may have an attachable shape on the user's body part (e.g., the user's face). Although not illustrated, the wearable device 1500 may further include a strap for being fixed on the user's body part, and/or one or more temples (e.g., the first temple 1404 and/or the second temple 1405 of FIGS. 14A to 14B). A first display 1550-1 for outputting an image to the left eye among the user's two eyes and a second display 1550-2 for outputting an image to the right eye among the user's two eyes may be disposed on the first surface 1510. The wearable device 1500 may be formed on the first surface 1510 and may further include rubber or silicon packing for preventing interference by light (e.g., ambient light) different from the light emitted from the first display 1550-1 and the second display 1550-2.

According to an embodiment, the wearable device 1500 may include cameras 1540-3 and 1540-4 for photographing and/or tracking two eyes of the user adjacent to each of the first display 1550-1 and the second display 1550-2. The cameras 1540-3 and 1540-4 may be referred to as ET cameras. According to an embodiment, the wearable device 1500 may include cameras 1540-1 and 1540-2 for photographing and/or recognizing the user's face. The cameras 1540-1 and 1540-2 may be referred to as FT cameras.

Referring to FIG. 15B, a camera (e.g., cameras 1540-5, 1540-6, 1540-7, 1540-8, 1540-9, and 1540-10), and/or a sensor (e.g., the depth sensor 1530) for obtaining information associated with the external environment of the wearable device 1500 may be disposed on the second surface 1520 opposite to the first surface 1510 of FIG. 15A. For example, the cameras 1540-5, 1540-6, 1540-7, 1540-8, 1540-9, and 1540-10 may be disposed on the second surface 1520 in order to recognize an external object different from the wearable device 1500. For example, by using cameras 1540-9, and 1540-10, the wearable device 1500 may obtain an image and/or video to be transmitted to each of the user's two eyes. The camera 1540-9 may be disposed on the second surface 1520 of the wearable device 1500 to obtain an image to be displayed through the second display 1550-2 corresponding to the right eye among the two eyes. The camera 1540-10 may be disposed on the second surface 1520 of the wearable device 1500 to obtain an image to be displayed through the first display 1550-1 corresponding to the left eye among the two eyes.

According to an embodiment, the wearable device 1500 may include the depth sensor 1530 disposed on the second surface 1520 in order to identify a distance between the wearable device 1500 and the external object. By using the depth sensor 1530, the wearable device 1500 may obtain spatial information (e.g., a depth map) about at least a portion of the FoV of the user wearing the wearable device 1500.

Although not illustrated, a microphone for obtaining sound outputted from the external object may be disposed on the second surface 1520 of the wearable device 1500. The number of microphones may be one or more according to embodiments.

As described above, according to an embodiment, the wearable device 1500 may have a form factor for being worn on the user's head. The wearable device 1500 in a state worn on the head may provide a user experience based on augmented reality and/or mixed reality. The wearable device 1500 may display UI including an external electronic device (e.g., the external electronic device 120 of FIG. 1) by using the first display 1550-1 and the second display 1550-2. A user wearing the wearable device 1500 may view media content displayed by the wearable device 1500 together with the external electronic device through the UI. The wearable device 1500 may execute a function for moving the media content to the external electronic device based on deformation of the external electronic device.

In an embodiment, a method for the wearable device to move information between the wearable device and the external electronic device may be required based on deformation of the external electronic device. As described above, according to an embodiment, a wearable device (e.g., the wearable device 101 of FIGS. 1 to 2) may comprise a communication circuitry (e.g., the communication circuit 240-1 of FIG. 2), a display (e.g., the display 220-1 of FIG. 2), memory (e.g., the memory 215-1 of FIG. 2) storing instructions, and a processor (e.g., the processor 210-1 of FIG. 2). The instructions, when executed by the processor, may cause the wearable device to obtain information with respect to a form of an external electronic device (e.g., the external electronic device 120 of FIGS. 1 to 2). The instructions, when executed by the processor, may cause the wearable device to, in response to identifying that the external electronic device is transformed into a first form based on the information, execute a function to move at least one first screen of the display to a display of the external electronic device. The instructions, when executed by the processor, may cause the wearable device to, in response to identifying that the external electronic device is transformed into a second form different from the first form based on the information, display through the display at least one second screen provided by the external electronic device. According to an embodiment, the wearable device may move at least one screen between the wearable device and the external electronic device based on deformation of the external electronic device.

For example, the instructions, when executed by the processor, may cause the wearable device to, in a state identifying the external electronic device including a flexible display foldable by a folding axis (e.g., the folding axis F of FIG. 1), identify a form of the external electronic device as being the first form or the second form based on an angle that the flexible display is folded by the folding axis.

For example, the wearable device may further comprise a camera (e.g., the camera 225 of FIG. 2). The instructions, when executed by the processor, may cause the wearable device to identify the angle by which the flexible display is folded with respect to the folding axis, based on identifying the flexible display by using an image of the camera.

For example, the instructions, when executed by the processor, may cause the wearable device to obtain the information including the angle through the communication circuitry.

For example, the instructions, when executed by the processor, may cause the wearable device to, while the external electronic device is transformed into the first form, display a visual object (e.g., the visual object 410 of FIG. 4, the visual object 810 of FIG. 8A, and/or the visual object 1210 of FIG. 12) for guiding or informing that the at least one first screen is moved to the flexible display of the external electronic device.

For example, the instructions, when executed by the processor, may cause the wearable device to, while the external electronic device is transformed from the second form into an intermediate form between the first form and the second form, display a visual object (e.g., the visual object 510 of FIG. 5, the visual object 840 of FIG. 8B) for guiding or informing that the at least one second screen is moved to the display.

For example, the instructions, when executed by the processor, may cause the wearable device to identify that the external electronic device is transformed into the first form, based on whether the angle of the flexible display folded by the folding axis exceeds to a first threshold angle. The instructions, when executed by the processor, may cause the wearable device to identify that the external electronic device is transformed into the second form, based on whether the angle of the flexible display folded by the folding axis is reduced lower or smaller than a second threshold angle smaller than the first threshold angle.

For example, the instructions, when executed by the processor, may cause the wearable device to cease to display the at least one first screen on the display, in response to transmitting a first signal to the external electronic device to display the at least one first screen through a display of the external electronic device.

For example, the wearable device may further comprise a camera. The instructions, when executed by the processor, may cause the wearable device to select the at least one first screen corresponding to the direction, among a plurality of screens executed using the display, based on identifying a direction of gaze from an image of the camera.

For example, the instructions, when executed by the processor, may cause the wearable device to, in a state transmitting a first signal to display a plurality of screens through the external electronic device, transmit the first signal to the external electronic device which includes information with respect to a layout of the plurality of screens.

For example, the instructions, when executed by the processor, may cause the wearable device to display a visual object for guiding or informing of movement of the at least one second screen on the display, in response to receiving a third signal indicating the at least one second screen from the external electronic device after transmitting a second signal to display the at least one second screen through the display of the wearable device.

For example, the instructions, when executed by the processor, may cause the wearable device to, in a state identifying the external electronic device including a flexible display insertable into a housing, identify a form of the external electronic device as being the first form or the second form based on a size that the flexible display is extracted from the size.

For example, the instructions, when executed by the processor, may cause the wearable device to, in a state in which the external electronic device is viewed through a preset portion within the display, identify transformation of the external electronic device by using the information.

As described above, according to an embodiment, a method of a wearable device may comprise obtaining information with respect to a form of an external electronic device. The method may comprise, in response to identifying that the external electronic device is transformed into a first form based on the information, executing a function to move at least one first screen to a display of the external electronic device. The method may comprise, in response to identifying that the external electronic device is transformed into a second form different from the first form based on the information, displaying through the display at least one second screen provided by the external electronic device.

For example, the obtaining may comprise, in a state identifying the external electronic device including a flexible display foldable by a folding axis, identifying a form of the external electronic device as being the first form or the second form based on an angle that the flexible display is folded by the folding axis.

For example, the obtaining may comprise, based on identifying the flexible display by using an image of a camera of the wearable device, identify the angle that the flexible display is folded by the folding axis.

For example, the obtaining may comprise obtain the information including the angle through the communication circuitry.

For example, the transmitting the first signal may, while the external electronic device is transformed into the first form, display a visual object for guiding or informing that the at least one first screen is moved to the flexible display of the external electronic device.

As described above, according to an embodiment, a wearable device (e.g., the wearable device 101 of FIGS. 1 to 2) may comprise a camera (e.g., the camera 225 of FIG. 2), a communication circuit (e.g., the communication circuit 240-1 of FIG. 2), a display (e.g., the display 220-1 of FIG. 2), memory (e.g., the memory 215-1 of FIG. 2) storing instructions, and a processor (e.g., the processor 210-1 of FIG. 2). The instructions, when executed by the processor, may cause the wearable device to obtain information on a form of the external electronic device, in a state in which an external electronic device (e.g., the external electronic device 120 of FIGS. 1 to 2) viewed through the display by using the camera is identified. The instructions, when executed by the processor, may cause the wearable device to display a visual object (e.g., the visual object 410 of FIG. 4, the visual object 510 of FIG. 5, the visual object 810 of FIG. 8A, the visual object 840 of FIG. 8B, and/or the visual object 1210 of FIG. 12) on the display to guide the movement of at least one media content (e.g., the media content 280 of FIG. 2), based on identifying transformation of a flexible display of the external electronic device by using the information. The instructions, when executed by the processor, may cause the wearable device to, while the visual object is displayed, execute a function for moving at least one media content between the wearable device and the external electronic device, based on transformation of the flexible display viewed through the display.

For example, the instructions, when executed by the processor, may cause the wearable device to transmit a signal for displaying the at least one media content by using the flexible display to the external electronic device through the communication circuit, based on identifying unfolding of the flexible display by using the information.

For example, the instructions, when executed by the processor, may cause the wearable device to display the visual object moving toward the flexible display, based on identifying the flexible display that is unfolded by exceeding a preset angle.

For example, the instructions, when executed by the processor, may cause the wearable device to display the visual object moving from the flexible display, based on identifying the flexible display that is folded below the preset angle.

For example, the instructions, when executed by the processor, may cause the wearable device to display the visual object moving toward the flexible display, based on identifying the flexible display that is extracted from a housing of the external electronic device.

For example, the instructions, when executed by the processor, may cause the wearable device to display the visual object moving from the flexible display, based on identifying the flexible display that is inserted into a housing of the external electronic device.

As described above, according to an embodiment, a method of a wearable device may comprise obtaining information on a form of the external electronic device, in a state in which an external electronic device viewed through a display of the wearable device by using a camera of the wearable device is identified. The method may comprise displaying a visual object on the display to guide the movement of at least one media content, based on identifying transformation of a flexible display of the external electronic device by using the information. The method may comprise, while the visual object is displayed, executing a function for moving at least one media content between the wearable device and the external electronic device, based on transformation of the flexible display viewed through the display.

For example, the executing may comprise transmitting a signal for displaying the at least one media content by using the flexible display to the external electronic device through the communication circuit, based on identifying unfolding of the flexible display by using the information.

For example, the executing may comprise displaying the visual object moving toward the flexible display, based on identifying the flexible display that is unfolded by exceeding a preset angle.

For example, the executing may comprise displaying the visual object moving from the flexible display, based on identifying the flexible display that is folded below the preset angle.

For example, the executing may comprise displaying the visual object moving toward the flexible display, based on identifying the flexible display that is extracted from a housing of the external electronic device.

For example, the executing may comprise displaying the visual object moving from the flexible display, based on identifying the flexible display that is inserted into a housing of the external electronic device.

According to an embodiment, a wearable device may comprise a communication circuitry, a display, memory configured to store instructions, and a processor. The instructions, when executed by the processor, cause the wearable device to display within the display at least one first screen. The instructions, when executed by the processor, cause the wearable device to transmit, in response to identifying that an external electronic device is transformed into a first state based on the information, to the external electronic device information with respect to the at least one first screen to display at least one second screen associated with the at least one screen displayed on the display of the wearable device through the external electronic device. The instructions, when executed by the processor, cause the wearable device to transmit, in response to identifying that the external electronic device is transformed into a second state different from the first state based on the information, information associated with at least one third screen displayed through the external electronic device. The instructions, when executed by the processor, cause the wearable device to display within the display of the wearable device at least one fourth screen associated with the at least one third screen being displayed through the display of the external electronic device.

For example, the instructions, when executed by the processor, cause the wearable device to identify the external electronic device including a hinge structure of a plurality of housings. The instructions, when executed by the processor, cause the wearable device to identify the state of the external electronic device as being the first state or the second state based on an angle between housings of the external electronic device.

For example, the wearable device may comprise a first camera. The instructions, when executed by the processor, cause the wearable device to based on identifying the flexible display by using an image captured by the first camera, identify the angle by which the flexible display is folded with respect to the folding axis.

For example, the instructions, when executed by the processor, cause the wearable device to obtain the information including the angle through the communication circuitry.

For example, the instructions, when executed by the processor, cause the wearable device to display, while the external electronic device is transformed into the first state, a visual object for guiding that the at least one first screen is moved to the flexible display of the external electronic device.

For example, the instructions, when executed by the processor, cause the wearable device to display, while the external electronic device is transformed from the second state into an intermediate state between the first state and the second state, a visual object for guiding that the at least one second screen is moved to the display of the wearable device.

For example, the instructions, when executed by the processor, cause the wearable device to identify, based on whether the angle of the flexible display folded with the respect to the folding axis exceeds a first threshold angle, that the external electronic device is transformed into the first state. The instructions, when executed by the processor, cause the wearable device to identify, based on whether the angle of the flexible display folded with respect to the folding axis is smaller than a second threshold angle smaller than the first threshold angle, that the external electronic device is transformed into the second state.

For example, the instructions, when executed by the processor, cause the wearable device to cease, in response to transmitting a first signal to the external electronic device to display the at least one first screen through the display of the external electronic device, to display the at least one first screen on the display of the wearable device.

For example, the wearable device may comprise a second camera. The instructions, when executed by the processor, cause the wearable device to select, based on identifying a direction of gaze from an image captured by the second camera, the at least one first screen corresponding to the direction, among a plurality of screens being displayed on the display of the wearable device.

For example, the instructions, when executed by the processor, cause the wearable device to transmit, in a state transmitting a second signal to display a plurality of screens through the display of the external electronic device, the second signal to the external electronic device, wherein the second signal includes information with respect to a layout of the plurality of screens.

For example, the instructions, when executed by the processor, cause the wearable device to display, in response to receiving a fourth signal indicating the at least one third screen from the external electronic device after transmitting a third signal to display the at least one third screen through the display of the wearable device, a visual object for guiding movement of the at least one second screen on the display of the wearable device.

For example, the instructions, when executed by the processor, cause the wearable device to identify, in a state in which the wearable device identifies the external electronic device including a flexible display insertable into a housing of the external electronic device, the state of the external electronic device as being the first state or the second state based on a size of the flexible display extracted from the housing.

For example, the instructions, when executed by the processor, cause the wearable device to identify, in a state in which the external electronic device is viewed through a preset portion within the display (220-1) of the wearable device, transformation of the external electronic device by using the information.

For example, the instructions, when executed by the processor, cause the wearable device to transmit, in response to identifying that the external electronic device is transformed into a first state while displaying the at least one first screen including a video, an uniform resource indicator (URI) indicating the video and a timing of the video being displayed through the at least one first screen to the external electronic device.

According to an embodiment, the non-transitory computer readable storage medium storing instructions may be provided. The instructions, when executed by an wearable device including a communication circuitry, and a display, cause the wearable device to display within the display at least one first screen. The instructions, when executed by the wearable device, cause the wearable device to transmit, in response to identifying that an external electronic device is transformed into a first state based on the information, to the external electronic device information with respect to the at least one first screen to display at least one second screen associated with the at least one screen displayed on the display of the wearable device through the external electronic device. The instructions, when executed by the wearable device, cause the wearable device to transmit, in response to identifying that the external electronic device is transformed into a second state different from the first state based on the information, information associated with at least one third screen displayed through the external electronic device. The instructions, when executed by the wearable device, cause the wearable device to display within the display of the wearable device at least one fourth screen associated with the at least one third screen being displayed through the display of the external electronic device on the display of the wearable device.

The apparatus described above may be implemented as a combination of hardware components, software components, and/or hardware components and software components. For example, the devices and components described in the embodiments may be implemented using one or more general purpose computers or special purpose computers such as processors, controllers, arithmetical logic unit(ALU), digital signal processor, microcomputers, field programmable gate array (FPGA), PLU(programmable logic unit), microprocessor, any other device capable of executing and responding to instructions. The processing device may perform an operating system OS and one or more software applications performed on the operating system. In addition, the processing device may access, store, manipulate, process, and generate data in response to execution of the software. For convenience of understanding, although one processing device may be described as being used, a person skilled in the art may see that the processing device may include a plurality of processing elements and/or a plurality of types of processing elements. For example, the processing device may include a plurality of processors or one processor and one controller. In addition, other processing configurations, such as a parallel processor, are also possible.

The software may include a computer program, code, instruction, or a combination of one or more of them and configure the processing device to operate as desired or command the processing device independently or in combination. Software and/or data may be embodied in any type of machine, component, physical device, computer storage medium, or device to be interpreted by a processing device or to provide instructions or data to the processing device. The software may be distributed on a networked computer system and stored or executed in a distributed manner. Software and data may be stored in one or more computer-readable recording media.

The method according to the embodiment may be implemented in the form of program instructions that may be performed through various computer means and recorded in a computer-readable medium. In this case, the medium may continuously store a computer-executable program or temporarily store the program for execution or download. In addition, the medium may be a variety of recording means or storage means in which a single or several hardware are combined and is not limited to media directly connected to any computer system and may be distributed on the network. Examples of media may include magnetic media such as hard disks, floppy disks and magnetic tapes, optical recording media such as CD-ROMs and DVDs, magnetooptical media such as floptical disks, ROMs, RAMs, flash memories, and the like to store program instructions. Examples of other media include app stores that distribute applications, sites that supply or distribute various software, and recording media or storage media managed by servers.

Although embodiments have been described according to limited embodiments and drawings as above, various modifications and modifications are possible from the above description to those of ordinary skill in the art. For example, even if the described techniques are performed in a different order from the described method, and/or components such as the described system, structure, device, circuit, etc. are combined or combined in a different form from the described method or are substituted or substituted by other components or equivalents, appropriate results may be achieved.

Therefore, other implementations, other embodiments, and equivalents to the claims fall within the scope of the claims to be described later.

## Claims

1. A wearable device (101, 1400, 1500), comprising:
a communication circuitry (240-1);
a display (220-1);
memory (215-1) configured to store instructions; and
a processor (210-1), wherein the instructions, when executed by the processor, cause the wearable device to:
display within the display at least one first screen;
in response to identifying that an external electronic device is transformed into a first state based on the information, transmit to the external electronic device information with respect to the at least one first screen to display at least one second screen associated with the at least one screen displayed on the display of the wearable device through the external electronic device; and
in response to identifying that the external electronic device is transformed into a second state different from the first state based on the information, transmit information associated with at least one third screen displayed through the external electronic device;
display within the display of the wearable device at least one fourth screen associated with the at least one third screen being displayed through the display of the external electronic device on the display (220-1) of the wearable device.

2. The wearable device of claim 1, wherein the instructions, when executed by the processor, cause the wearable device to:
identify the external electronic device including a hinge structure of a plurality of housings;
identify the state of the external electronic device as being the first state or the second state based on an angle between housings of the external electronic device.

3. The wearable device of claim 2, further comprising a first camera (225),
wherein the instructions, when executed by the processor, cause the wearable device to:
based on identifying the flexible display by using an image captured by the first camera, identify the angle by which the flexible display is folded with respect to the folding axis.

4. The wearable device of claim 2 or claim 3, wherein the instructions, when executed by the processor, cause the wearable device to:
obtain the information including the angle through the communication circuitry.

5. The wearable device of any one of claim 2 to claim 4, wherein the instructions, when executed by the processor, cause the wearable device to:
while the external electronic device is transformed into the first state, display a visual object (410, 810, 1210) for guiding that the at least one first screen is moved to the flexible display of the external electronic device.

6. The wearable device of any one of claim 1 to claim 5, wherein the instructions, when executed by the processor, cause the wearable device to:
while the external electronic device is transformed from the second state into an intermediate state between the first state and the second state, display a visual object (510, 840) for guiding that the at least one second screen is moved to the display (220-1) of the wearable device.

7. The wearable device of any one of claim 2 to claim 6, wherein the instructions, when executed by the processor, cause the wearable device to:
based on whether the angle of the flexible display folded with the respect to the folding axis exceeds a first threshold angle, identify that the external electronic device is transformed into the first state;
based on whether the angle of the flexible display folded with respect to the folding axis is smaller than a second threshold angle smaller than the first threshold angle, identify that the external electronic device is transformed into the second state.

8. The wearable device of any one of claim 1 to claim 7, wherein the instructions, when executed by the processor, cause the wearable device to:
in response to transmitting a first signal to the external electronic device to display the at least one first screen through the display of the external electronic device, cease to display the at least one first screen on the display (220-1) of the wearable device.

9. The wearable device of any one of claim 1 to claim 8, further comprising a second camera;
wherein the instructions, when executed by the processor, cause the wearable device to:
based on identifying a direction of gaze from an image captured by the second camera, select the at least one first screen corresponding to the direction, among a plurality of screens being displayed on the display (220-1) of the wearable device.

10. The wearable device of any one of claim 1 to claim 9, wherein the instructions, when executed by the processor, cause the wearable device to:
in a state transmitting a second signal to display a plurality of screens through the display of the external electronic device, transmit the second signal to the external electronic device, wherein the second signal includes information with respect to a layout of the plurality of screens.

11. The wearable device of any one of claim 1 to claim 10, wherein the instructions, when executed by the processor, cause the wearable device to:
in response to receiving a fourth signal indicating the at least one third screen from the external electronic device after transmitting a third signal to display the at least one third screen through the display of the wearable device, display a visual object for guiding movement of the at least one second screen on the display (220-1) of the wearable device.

12. The wearable device of claim 1, wherein the instructions, when executed by the processor, cause the wearable device to:
In a state in which the wearable device identifies the external electronic device including a flexible display insertable into a housing of the external electronic device, identify the state of the external electronic device as being the first state or the second state based on a size of the flexible display extracted from the housing.

13. The wearable device of any one of claim 1 to claim 12, wherein the instructions, when executed by the processor, cause the wearable device to:
in a state in which the external electronic device is viewed through a preset portion within the display (220-1) of the wearable device, identify transformation of the external electronic device by using the information.

14. The wearable device of any one of claim 1 to claim 13, wherein the instructions, when executed by the processor, cause the wearable device to:
in response to identifying that the external electronic device is transformed into a first state while displaying the at least one first screen including a video, transmit an uniform resource indicator (URI) indicating the video and a timing of the video being displayed through the at least one first screen to the external electronic device.

15. A non-transitory computer readable storage medium storing instructions, wherein the instructions, when executed by an wearable device including a communication circuitry, and a display, cause the wearable device to:
display within the display at least one first screen;
in response to identifying that an external electronic device is transformed into a first state based on the information, transmit to the external electronic device information with respect to the at least one first screen to display at least one second screen associated with the at least one screen displayed on the display of the wearable device through the external electronic device; and
in response to identifying that the external electronic device is transformed into a second state different from the first state based on the information, transmit information associated with at least one third screen displayed through the external electronic device;
display within the display of the wearable device at least one fourth screen associated with the at least one third screen being displayed through the display of the external electronic device on the display of the wearable device.
